# EUROPÄISCHE PATENTSCHRIFT

(11) **EP 2 068 436 B1**
(45) Veröffentlichungstag und Bekanntmachung des Hinweises auf die Patenterteilung: **17.07.2013**
(21) Anmeldenummer: 07023353.1
(22) Anmeldetag: 03.12.2007
(51) Int. Cl.: H02P 8/12, H02P 8/38

(54) **Verfahren und Vorrichtung zum Erkennen von Schrittverlusten eines Schrittmotors**
Method and device for identifying step loss in a stepper motor
Procédé et dispositif destinés à détecter les pertes de pas d'un moteur pas à pas

(43) Veröffentlichungstag der Anmeldung: 10.06.2009
(73) Patentinhaber: Roche Diagnostics GmbH, 68305 Mannheim (DE); F.Hoffmann-La Roche AG, 4070 Basel (CH)
(72) Erfinder: Egger,Heinz, A-8071 Grambach (AT); Heinz, Bernhard, A-8010 Graz (AT); Schuhmacher, Jürgen, 63589 Linsengericht (DE)
(74) Vertreter: Margotti, Herwig Franz

(56) Entgegenhaltungen:
- EP-A- 0 402 220
- EP-A- 1 388 930
- EP-A- 1 434 344
- WO-A-03/030349
- DE-A1- 19 723 933
- US-A- 5 159 542
- US-A- 5 428 522

## Beschreibung

Die Erfindung betrifft ein Verfahren und eine Vorrichtung zum Erkennen von Schrittverlusten eines Schrittmotors, gemäß den Oberbegriffen der Ansprüche 1 bzw. 17.

Der Schrittmotor ist eine Sonderbauform der Synchronmaschinen und besteht aus einem feststehenden Stator, welcher mit mehreren Spulen ausgeführt ist, und einem sich darin drehenden Rotor. In Abhängigkeit von der Konstruktionsweise des Rotors werden drei Grundtypen von Schrittmotoren unterschieden:
- der permanentmagnetisch erregte Schrittmotor,
- der Schrittmotor mit variabler Reluktanz und
- der Hybridschrittmotor.

Beim permanentmagnetisch erregten Schrittmotor besteht der Rotor aus einem zylindrischen Permanentmagneten mit radialer Magnetisierung. Das heißt, Permanentmagneten mit unterschiedlicher Polarität wechseln sich entlang des Rotorumfangs ab. Der Rotor richtet sich immer nach dem durch Bestromung der Spulen erzeugten Magnetfeld aus. Werden die Spulen nacheinander eingeschaltet, dreht sich der Rotor in die entsprechende Richtung. Demnach vollführt der Schrittmotor eine Umdrehung, wenn alle Spulen nacheinander ein- und ausgeschaltet werden.

Beim Schrittmotor mit variabler Reluktanz besteht der Rotor aus einem unerregten gezahnten Weicheisenkern. Bei dieser Bauform entsteht das Moment aufgrund des Rotoraufbaus, welcher einen veränderlichen magnetischen Luftspaltwiderstand bietet. Der Rotor folgt dem Schrittfeld, da er bestrebt ist sich im Statorfeld so auszurichten, dass die magnetische Energie im Luftspalt minimal wird.

Der Hybridschrittmotor ist eine Mischform aus permanentmagnetisch erregtem Schrittmotor und variablem Reluktanz-Schrittmotor. Er besteht aus einem axial gepolten Permanentmagneten, an dessen Enden gezahnte Rotorscheiben aus weichmagnetischem Material befestigt sind. Die beiden Rotorscheiben werden durch den Permanentmagneten vormagnetisiert und sind um eine halbe Zahnbreite zueinander versetzt, sodass sich Nord- und Südpol abwechseln. Mit dem Hybridschrittmotor sind sehr kleine Schrittwinkel möglich, und er besitzt ein Selbsthaltemoment. Jedoch handelt es sich um eine aufwändige Bauform.

Schrittmotoren funktionieren nach dem Synchronprinzip. Das Drehmoment, welches den Rotor antreibt, entsteht durch unterschiedlich ausgerichtete Magnetfelder in Stator und Rotor. Der Rotor dreht sich immer so, dass sich der größtmögliche magnetische Fluss ausbildet.

Im Gegensatz zu anderen Motoren befinden sich beim Schrittmotor nur im Stator Spulen. Die Drehbewegung entsteht also durch gezieltes Beschalten der einzelnen Spulenwicklungen, was ein Weiterschalten des Statorfeldes nach jedem Schrittimpuls um einen bestimmten Winkel bewirkt. Das Weiterschalten des Schrittfeldes wird auch Kommutierungsvorgang genannt.

So lassen sich auf einfachste Weise Drehsinn und Drehzahl des Motors steuern. Um die Position des Rotors zu bestimmen, genügt es, ausgehend von einer Ausgangslage die Schritte im bzw. gegen den Uhrzeigersinn zu zählen und mit dem Schrittwinkel zu multiplizieren.

Bei der Ansteuerung der Motorwicklung unterscheidet man zwischen unipolarer und bipolarer Ansteuerung.

Bei der unipolaren Ansteuerung besitzt jeder Pol zwei Wicklungen, bzw. eine Wicklung mit Mittelanzapfung. Die Richtung des Magnetfeldes ist davon abhängig, welche der beiden Wicklungen bestromt ist. Der Vorteil dieser Ansteuerung ist der geringe Elektronikaufwand. Der Nachteil besteht in der schlechten Ausnutzung des Wicklungsraumes von 50 %, da immer nur eine Wicklung, abhängig von der Stromrichtung, genutzt wird. Die Verwendung von zwei Spulen pro Pol hat außerdem einen größeren Motor zur Folge.

Bei der bipolaren Ansteuerung besitzt jeder Pol nur eine Wicklung. Die Richtung des Magnetfeldes ist davon abhängig, in welche Richtung der Strom durch diese eine Wicklung fließt. Diese Art der Ansteuerung hat den Vorteil, dass der gesamte Wicklungsraum genutzt wird. Der Nachteil besteht im höheren Elektronikaufwand.

Schrittmotoren lassen sich auf mehrere Arten betreiben. Die einfachste Betriebsart ist der WaveDrive, bei dem um den Umfang fortschreitend immer nur eine Spule bestromt wird. Der Vorteil dieser Betriebsart ist, dass sie einfach zu implementieren ist und auch mit sehr günstigen Mikrocontrollern leicht realisiert werden kann. Der Nachteil dagegen ist das niedrigere Drehmoment, denn da immer nur eine Spule bestromt wird, sinkt es mit dem Faktor 1/√2, also auf ca. 70% des theoretischen Maximums.

Dem gegenüber sind beim Vollschrittbetrieb stets alle Wicklungssysteme bestromt. Die Drehbewegung wird durch gezieltes Ändern der Stromrichtung in den Wicklungen erreicht.
Dadurch, dass stets alle Wicklungssysteme bestromt sind, erreicht man bei dieser Betriebsart das höchst mögliche Drehmoment. Nachteilig sind die relativ großen Schritte, wodurch der Motor zu Resonanzschwingungen neigt.

Im Halbschrittbetrieb werden der WaveDrive und der Vollschrittbetrieb miteinander kombiniert. Bei einem Schrittmotor mit zwei Spulen werden also immer abwechselnd eine oder beide Spulen bestromt. Damit können mehr Winkelpositionen angefahren werden. Daraus ergibt sich zwar ein höherer Schaltungsaufwand, aber auch eine höhere Positioniergenauigkeit. Allerdings "springt" der Motor, sobald der Strom abgeschaltet wird, immer auf eine der Vollschritt-Positionen zurück. Der größte Vorteil des Halbschrittbetriebes ist, dass der Motor wesentlich weniger vibriert, da der Rotor weniger Kraftstößen unterworfen ist. Dem gegenüber wird beim Vollschrittbetrieb und beim WaveDrive der Rotor immer von einer Position in die nächste gerissen und schwingt dort um die endgültige Lage. Diese Schwingungen rufen auch Vibrationen des Gehäuses hervor und der Drehmomentverlauf ist ruckartig. Damit ist das Gesamtsystem relativ laut. Durch die höhere Anzahl an Positionen beim Halbschrittbetrieb sind die Schrittwinkel kleiner und damit verringern sich die Vibrationen. Allgemein gilt, je kleiner die Schritte werden, desto gleichmäßiger wird der Kraftverlauf, und umso leiser wird auch das Gesamtsystem. Außerdem wird ein Schrittverlust unwahrscheinlicher, weil die Rotorschwingungen abnehmen.

Wenn man die Idee der Verringerung der Schrittwinkel durch Erhöhung der Teilschritte immer weiter treibt, kommt man zu dem Schluss, dass eine Sinus- bzw. Cosinus-förmige Ansteuerung das Optimum darstellt. In diesem Fall wäre der Kraftverlauf gleichmäßig, und zu hören wäre nur noch die Grundschwingung der Frequenz, mit der der Motor angesteuert wird. Und genau das realisiert der Microstep-Betrieb. In der Praxis erfolgt jedoch keine Ansteuerung mit einem genau sinusförmigen Signal, sondern man bedient sich pulsweitenmodulierten Rechteck-Strömen mit einer Schaltfrequenz über der Hörschwelle. Dabei dient die Motorspule selbst als Filter und glättet das Rechtecksignal so weit, dass ein angenähert Sinus- bzw. Cosinus-förmiger Strom durch die Wicklungen fließt.

Schrittmotoren werden, wie bereits erwähnt, hauptsächlich für Positionierungsaufgaben verwendet. Der Vorteil dieser Motoren liegt darin, dass die Position des Motors einfach durch Mitzählen der Schritte, welche einer festgelegten quantisierten Bewegung entsprechen, bestimmt werden kann. Dennoch werden Schrittmotoren nur selten ohne Positionierungssensorik eingesetzt. Der Grund dafür ist das mögliche Auftreten von Schrittverlusten.

Schrittverluste entstehen, wenn der Rotor dem sich drehenden Statormagnetfeld nicht mehr folgen kann - der Motor blockiert. Ursache dafür ist meist eine zu hohe Last oder eine mechanische Blockade.

Um diese unerwünschten Schrittverluste zu erkennen und in der Folge den dadurch entstandenen Positionierungsfehler zu beheben, gibt es grundsätzlich zwei Möglichkeiten:
1. mit Hilfe von Sensoren (z.B. Messung der Drehzahl)
2. ohne zusätzlich Sensoren über das elektromagnetische Feld des Motors.

Die Verwendung von Sensoren zur Schrittverlusterkennung ist erprobt, aber teuer, weshalb man nach Möglichkeiten sucht, diese zu vermeiden.

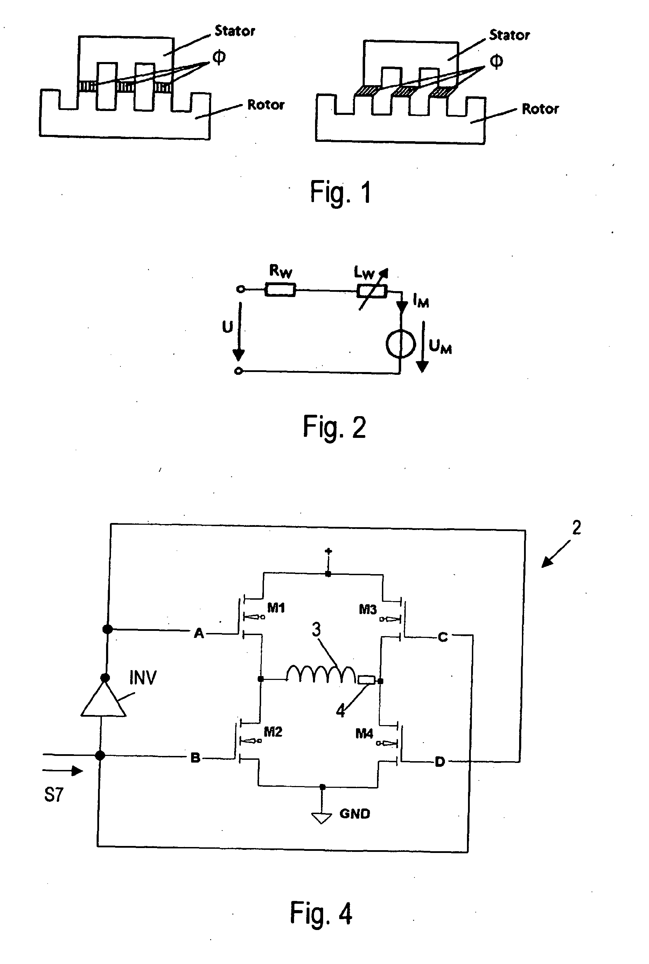

Bei der sensorlosen Schrittverlusterkennung dient der Motor selbst als Sensor. Dies wird durch bestimmte Eigenschaften eines Schrittmotors möglich, welche dazu führen, dass sich das elektromagnetische Feld des Motors durch die auf den Motor ausgeübte Belastung ändert. Insbesondere besitzt der Schrittmotor die Eigenschaft, dass die Drehzahl bei Belastung konstant bleibt, es aber zu einer Phasenverschiebung zwischen Rotor und Drehfeld kommt. In Analogie zur Synchronmaschine wird dieser Phasenverschiebungswinkel als Polradwinkel bezeichnet. Die Nacheilung des Rotors gegenüber dem Stator unter Last ist in Fig. 1 verdeutlicht. Im linken Bild von Fig. 1 läuft der Rotor im Leerlauf, der Polradwinkel ist Null. Wird der Rotor nun stärker belastet, beginnt er dem Statorfeld Φ nachzueilen, was im rechten Bild gezeigt wird. Ab einer bestimmten motorabhängigen Last wird der Polradwinkel zu groß und das Magnetfeld der nächsten Statorspule liegt dem Rotor näher, als das, welchem er derzeit folgt. Dann fällt der Rotor in das nächste Magnetfeld. Das bezeichnet man als Schrittverlust. Wenn die Last zu groß wird, kann der Rotor gar keinem Magnetfeld mehr folgen, sondern vibriert nur mehr. In diesem Fall verliert der Motor kontinuierlich Schritte. Zu genau diesem Phänomen kommt es auch, wenn der Motor mit einer zu hohen Frequenz gestartet wird. Durch das Trägheitsmoment des Rotors kann er nicht sofort einem rasch umlaufenden Magnetfeld folgen. Um also den Motor mit höheren Frequenzen betreiben zu können, muss der Motor langsamer gestartet werden und dann mittels einer Frequenzrampe beschleunigt werden. Die Frequenz, mit der der Motor gerade noch anfahren kann ist gleichzeitig auch jene, bei der der Motor, wenn man den Strom abschaltet, innerhalb eines Schrittes zum Stehen kommt. Sie wird Start-/Stop-Frequenz genannt.

Wie im elektrischen Ersatzschaltbild des Schrittmotors gemäß Fig. 2 zu erkennen ist, besteht die Motorwicklung aus einem induktiven (L_{W}) und einem ohmschen (R_{W}) Anteil. Die im Schrittmotor erzeugte Generatorspannung UM ist proportional zur Drehzahl. Die beschriebene Nacheilung des Rotors gegenüber dem Statormagnetfeld unter Last führt zu einer Vergrößerung des Luftspaltes zwischen Stator und Rotor, durch den der magnetische Fluss Φ hindurch tritt, diese Luftspaltvergrößerung führt wiederum zu einer Verminderung der Induktivität L_{W}.

Die Firma Trinamic Microchips hat unter der Bezeichnung TMC246/249 einen Treiber für Schrittmotoren auf den Markt gebracht, der über die Generatorspannung des Schrittmotors einen Schrittverlust erkennen kann. Dieser Treiber ist jedoch nur begrenzt einsetzbar, denn bei kleinen Motoren und Drehzahlen versagt das Messprinzip, weil die Generatorspannung zu klein ist, um zuverlässige Aussagen über den Lastzustand treffen zu können.

Für eine Erfassung von Schrittverlusten auf Basis der lastabhängigen Motorinduktivität muss die Induktivität gemessen werden. Zur Messung der Motorinduktivität stehen zwei Methoden zur Verfügung:
- über die Amplitude des Wicklungsstromes, und
- über die Phasenverschiebung zwischen Spannung und Wicklungsstrom.

In Helmut Oswald, "FPGA Schrittmotorsteuerung mit Lastmessung/Schrittverlusterkennung über das elektromagnetische Feld des Motors", Diplomarbeit an der Fachhochschule Technikum Wien, 2006, wurden die Möglichkeiten der Induktivitätsmessung untersucht und mit diesen Erkenntnissen eine Schrittmotorsteuerung aufgebaut. Die in diesem Dokument vorgeschlagene Messmethode beruht darauf, dass der Phasenversatz zwischen Strom und Spannung gemessen und daraus auf die Induktivität zurückgeschlossen wird. Das Problem bei dieser Messmethode ist allerdings, dass die Auswirkungen der Induktivitätsänderungen unterhalb einer bestimmten Frequenz sehr klein werden. Daher ist auch diese Messmethode nur bedingt einsetzbar.

Das Dokument US 5,428,522 A (=D1) offenbart eine unipolare, 4-Quadranten-, pulsweitenmodulierte Leistungswandlerschaltung in H-Brücken-Topologie zur Zuführung eines gewünschten Stroms zu einer induktiven Last, wie z.B. einer Motorspule. Der zugeführte Strom wird erfasst und verglichen, ob er innerhalb eines um die gewünschte Stromwellenform definierten Strombandes liegt, wobei das Stromband durch eine obere Grenze und eine untere Grenze definiert wird. Es wird ein bürstenloser Gleichstrommotor angesteuert, umfassend das Zuführen einer pulsweitenmodulierten Spannung zu einer Spule des Motors, das Erfassen des durch die Spule fließenden Stroms, und das Vergleichen, ob der erfasste Strom bezogen auf einen, insbesondere weitgehend sinusförmigen, Vorgabewert innerhalb einer durch eine obere Schaltschwelle und eine untere Schaltschwelle definierten Strombandbreite liegt. Wenn der Strom ansteigt und entweder die obere Grenze überschritten wird oder ein normalerweise mit fallendem Strom zusammenfallender Taktimpuls auftritt, wird DIR=0 gesetzt (d.h. die Stromrichtung auf "fallend" gesetzt). Wenn der Strom fällt (DIR=0) und entweder die untere Grenze unterschritten wird oder ein normalerweise mit ansteigendem Strom zusammenfallender Taktimpuls auftritt, wird DIR=1 gesetzt (d.h. die Stromrichtung auf "steigend" gesetzt). Somit erfolgt die Umkehr der Stromrichtung auch, wenn der momentane Stromwert von der oberen oder unteren Grenze beabstandet innerhalb des Strombandes liegt.

Das Dokument EP 0 402 220 A beschreibt ein Verfahren und eine Vorrichtung zum Erkennen von Schrittverlusten bei einer Motorsteuerung, wobei eine Spannung im Pfad zu einer Motorspule abgegriffen, digitalisiert, tiefpassgefiltert und das resultierende Signal darauf untersucht wird, ob es über einer Schrittverlustschwelle Vs liegt oder diese Schrittverlustschwelle schneidet.

Es besteht somit nach wie vor das Bedürfnis nach einer Ansteuerung von Schrittmotoren die gleichzeitig das Erkennen von Schrittverlusten ermöglicht. Insbesondere sollte eine solche Ansteuer- und Schrittverlusterkennungsvorrichtung einen kleinen Bauraum aufweisen, die Schrittverlusterkennung ohne externe Sensoren und daher kostengünstig ermöglichen, eine hohe Erkennungsgenauigkeit über einen großen Last- und Drehzahlbereich bieten, (auch bei kleinen Baugrößen), sowie einen möglichst ruhigen und vibrationsfreien Betrieb des Schrittmotors sicherstellen.

Die vorliegende Erfindung löst diese Aufgabe durch Bereitstellen eines Verfahrens und einer Vorrichtung mit den kennzeichnenden Merkmalen der Ansprüche 1 bzw. 13.

Erfindungsgemäß erfolgt hierbei die Ansteuerung des Schrittmotors durch Zuführen einer pulsweitenmodulierten Spannung (PWM) zu einer Spule des Schrittmotors unter Erfassen des durch die Spule fließenden Stroms. Durch einen Vergleich wird ermittelt, ob der erfasste Strom bezogen auf einen Vorgabewert innerhalb einer durch eine obere Schaltschwelle und eine untere Schaltschwelle definierten Strombandbreite liegt, wobei die Stromzufuhr zur Spule eingeschaltet wird, wenn der erfasste Strom auf den unteren Schwellwert abgesunken ist und die Stromzufuhr zur Spule abgeschaltet wird, wenn der erfasste Strom auf den oberen Schwellwert gestiegen ist. Durch die Erfindung wird somit eine "Strombandführung" realisiert, bei der der Strom durch die Spule von einem, vorzugsweise annähernd sinusförmigen Vorgabewert, nur innerhalb einer bestimmten "Strombandbreite" abweichen kann.

Zur genauen und leicht anpassbaren Steuerung des Verlaufs des Vorgabewerts wird die Verwendung eines Digital/Analog-Wandlers vorgeschlagen, der an seinem digitalen Eingang die Werte von einem Controller, z.B. ein FPGA, zugewiesen bekommt.

Aufgrund der verbesserten Verarbeitbarkeit der Signale ist vorgesehen, dass der erfasste Strom zur weiteren Verarbeitung in ein proportionales Spannungssignal umgewandelt wird, das optional in einem Tiefpassfilter von hochfrequenten Störungen bereinigt wird.

Gemäß der Erfindung wird vor dem Vergleichen mit der oberen Schaltschwelle und der unteren Schaltschwelle der erfasste Strom bzw. das zum erfassten Strom proportionale Spannungssignal vom Vorgabewert subtrahiert und optional verstärkt. Die Realisierung dieser Funktion erfolgt beispielsweise mittels eines Differenzverstärkers.

Das resultierende Differenzsignal weist eine Signalform auf, die um den Vorgabewert vermindert zum erfassten Strom proportional ist. Das Differenzsignal wird mit der oberen Schaltschwelle und der unteren Schaltschwelle in einem Schmitt-Trigger, vorzugsweise einem Präzisions-Schmitt-Trigger, verglichen, wobei die Hysterese des Schmitt-Triggers für die beiden Schaltschwellen repräsentativ ist. Das resultierende Steuersignal des Schmitt-Triggers steuert einen Treiber zur Erzeugung der PWM-Spannung zur Zufuhr zur Spule an.

In einer Ausführungsform der Schrittmotorsteuerung erfolgt die sensorlose Schrittverlusterkennung, indem die Anstiegszeit des Stroms von der unteren Schaltschwelle zur oberen Schaltschwelle oder die Abfallzeit des Stroms von der oberen Schaltschwelle zur unteren Schaltschwelle oder die aus Anstiegszeit und Abfallzeit zusammengesetzte Periodendauer bzw. ein Vielfaches davon gemessen und mit einer oberen Schrittverlustschwelle verglichen wird, bei deren Überschreiten ein Schrittverlust detektiert wird.

Diese Ausführungsform zur Schrittverlustdetektierung beruht darauf, dass die Induktivität L_{W} des Schrittmotors von der Größe des Luftspalts im Magnetkreis und damit vom Lastmoment abhängig ist, wogegen im elektrischen Ersatzschaltbild des Schrittmotors (siehe Fig. 2) der ohmsche Widerstand R_{W}, die Versorgungsspannung U und der Strom I_{M} als konstant angenommen werden können und die Generatorspannung U_{M} zwar drehzahlabhängig, aber nicht lastabhängig und somit für die vorgeschlagene Messung irrelevant ist. Gemäß der Erfindung wird der Schrittmotor in einer so genannten "Strombandführung" betrieben, deren Hysterese, d.h. Bandbreite vorgegeben ist. Anders gesagt, wird der Schrittmotor gemäß der Erfindung so angesteuert, dass der Strom durch die Motorspule zwischen einer unteren und einer oberen Schaltschwelle gehalten wird, welche Schaltschwellen die maximalen Abweichungen von einem Referenzstromverlauf definieren. Der Referenzstromverlauf ist vorzugsweise (gesteppt) sinusförmig. Die Anstiegszeit des Stroms von der unteren bis zur oberen Schaltschwelle sowie die Abfallszeit des Stroms von der oberen zur unteren Schaltschwelle sind proportional zur Induktivität L_{W}. Somit lässt sich die Induktivitätsmessung in eine Zeitmessung transformieren, die schaltungstechnisch, z.B. mit einem FPGA, sehr gut realisierbar ist.

Damit sich eine gewisse Stromabhängigkeit der Messung aus dem Ergebnis herauskürzt, ist es bevorzugt, dass zumindest zwei Periodendauern um den Nullpunkt des Stroms gemessen werden.

Wenn der Schrittmotor oberhalb seiner Start-/Stopp-Frequenz betrieben wird, tritt bei Schrittverlusten der Fall auf, dass der Motor nicht mehr anfahren kann, sondern nur mehr vibriert, was sich in einer verkürzten Periodendauer des Stroms äußert. Es ist deshalb bei hohen Drehzahlen zweckmäßig, die Anstiegszeit oder die Abfallzeit oder die Periodendauer des Stroms bzw. ein Vielfaches davon zu messen und mit einer unteren Schrittverlustschwelle (tmin) zu vergleichen, bei deren Unterschreiten ein Schrittverlust detektiert wird.

Die obere Schrittverlustschwelle (tmax) und/oder die untere Schrittverlustschwelle (tmin) sind von der Motorgeschwindigkeit, vom Motortyp und vom Verhältnis zwischen Nennstrom und tatsächlich zugeführter Stromstärke abhängig. Es ist daher vorgesehen, diese Parameter bei der Auswahl der jeweiligen Schrittverlustschwellen zu berücksichtigen, wobei die entsprechenden Werte in mehrdimensionalen Lookup-Tabellen in einem Speicher abgelegt oder als Funktionen oder stückweise zusammengesetzte Funktionen von einem Controller, z.B. ein FPGA, errechnet werden.

In einer alternativen Ausführungsform der Erfindung erfolgt die Schrittverlusterkennung, indem das Steuersignal mit einer vorgegebenen Taktfrequenz abgetastet wird und die Abtastwerte gefiltert werden. Das gefilterte Signal wird dann nach jedem Microstep gespeichert. Aus jeweils zwei Abschnitten des gefilterten Signals wird ein Differenzsignal errechnet und mit einer Schrittverlustschwelle verglichen, bei deren Erreichen ein Schrittverlust detektiert wird. Diese Ausführungsform bietet den Vorteil, dass das Aufnehmen von zweidimensionalen Motordaten nicht erforderlich ist.

Eine an die Rechenleistung geringe Anforderungen stellende Differenzsignalbildung wird beispielweise realisiert, indem das Differenzsignal jeweils durch Summation der ersten Halbwelle und der zweiten Halbwelle derselben Periode des gefilterten Signals S8 errechnet wird.

Ein wesentlich glätteres Differenzsignal lässt sich erzielen, wenn die Differenzbildungsmittel das Differenzsignal aus einer Subtraktion der Vollwelle einer Periode von der Vollwelle der vorangegangenen Periode des gefilterten Signals errechnen.

In einer weiteren alternativen Ausführungsform der Erfindung erfolgt die Schrittverlusterkennung, indem das Steuersignal durch ein erstes Tiefpassfilter geführt wird, und optional in einem zweiten Tiefpassfilter weiter geglättet wird und das gefilterte und geglättete Signal anschließend Rechenmitteln zugeführt wird, in denen es einer Kurvendiskussionsrechnung, insbesondere einer Gradientenanalyse, unterzogen wird, aus der detektierbar ist, ob ein Schrittverlust aufgetreten ist. Diese Ausführungsform der Erfindung ermöglicht eine umfassende Auswertung von Signalformen des gefilterten Signals, wodurch auch Grenzfälle des Auftretens von Schrittverlusten mit hoher Wahrscheinlichkeit richtig detektiert werden können.

Weitere Merkmale und Vorteile der Erfindung werden aus der nachfolgenden Beschreibung eines Ausführungsbeispiels unter Bezugnahme auf die Zeichnungen ersichtlich. In den Zeichnungen zeigen:
Fig. 1 das Prinzip der Rotornacheilung gegenüber dem Statorfeld unter Last;
Fig. 2 ein elektrisches Ersatzschaltbild einer Motorspule;
Fig. 3 ein Blockschaltbild einer erfindungsgemäßen Schrittmotorverlusterkennungsschaltung;
Fig. 4 ein Schaltbild eines Motorspulentreibers gemäß der erfindungsgemäßen Schrittmotoransteuerung;
Fig. 5 ein Zeitdiagramm der Steuersignale für den Motorspulentreiber sowie der erfindungsgemäßen Strombandführung;
Fig. 6 ein Zeitdiagramm eines Abschnitts des pulsweitenmodulierten Ausgangsstromsignals des Motorspulentreibers;
Fig. 7 den Stromverlauf durch die Motorspule;
Fig. 8 in vergrößerter Darstellung den Stromverlauf durch die Motorspule, dargestellt als in ein Spannungssignal umgewandeltes Signal;
Fig. 9 das dem Stromverlauf durch die Motorspule entsprechende Spannungssignal und eine gesteppt sinusförmige Referenzspannung, die als Istwert bzw. Sollwert zur Differenzbildung an die Eingänge eines Differenzverstärkers der erfindungsgemäßen Schrittmotoransteuerung gelegt sind;
Fig. 10 eine vergrößerte Darstellung eines Ausschnitts der Signale von Fig. 9;
Fig. 11 das Ausgangsdifferenzsignal des Differenzverstärkers;
Fig. 12 das Eingangssignal und ein Referenzspannungssignal am Präzisions-Schmitt-Trigger gemäß der erfindungsgemäßen Schrittmotoransteuerung;
Fig. 13 das Steuersignal des Präzisions-Schmitt-Triggers, das ein PWM-Signal ist;
Fig. 14 ein Diagramm der Periodendauer einer Vielzahl von Messwerten des PWM-Signals in Abhängigkeit von der Motorlast bei einer Motordrehzahl von 500 Steps/sek;
Fig. 15 ein weiteres Diagramm der Periodendauer einer Vielzahl von Messwerten des PWM-Signals in Abhängigkeit von der Motorlast bei einer Motordrehzahl von 3000 Steps/sek;
Fig. 16 ein Diagramm der durchschnittlichen Periodendauer des PWM-Signals sowie von oberen und unteren Schrittverlustschwellen in Abhängigkeit von der Motordrehzahl;
Fig. 17 ein Diagramm der oberen Schrittverlustschwelle der Periodendauer des PWM-Signals in Abhängigkeit vom Strom durch die Motorspule.
Fig. 18 ein Blockschaltbild einer weiteren Ausführungsform einer erfindungsgemäßen Schrittmotorverlusterkennungsschaltung;
Fig. 19 ein Signaldiagramm der wesentlichen Signale der Ausführungsform der Erfindung gemäß Fig. 18.
Fig. 20 ein Blockschaltbild einer dritten Ausführungsform einer erfindungsgemäßen Schrittmotorverlusterkennungsschaltung;
Fig. 21 ein Signaldiagramm, das die Gradientenanalyse gemäß der Ausführungsform der Erfindung von Fig. 20 schematisch darstellt; und
Fig. 22 einen vergrößerten Abschnitte des Signaldiagramms von Fig. 21.

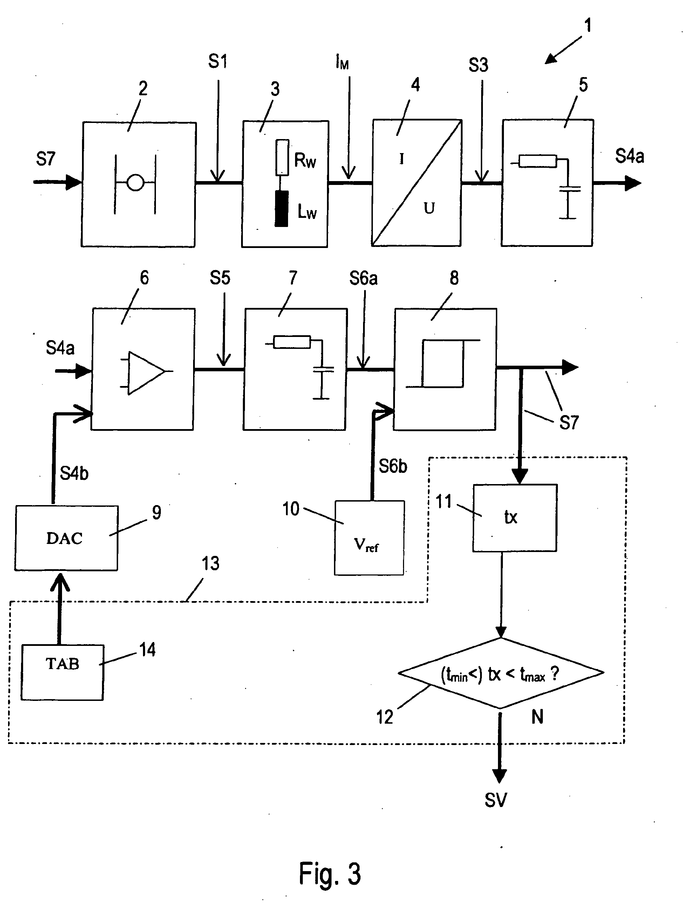

Es folgt nun anhand des Blockschaltbilds von Fig. 3 eine ausführliche Beschreibung einer erfindungsgemäßen Motorsteuerung 1 mit Schrittverlusterkennung für einen Schrittmotor, insbesondere für einen Hybrid-Schrittmotor. Für die Erläuterung dieses Ausführungsbeispiels wird davon ausgegangen, dass die Motorsteuerung für einen Zweiphasenmotor ausgelegt ist, bei dem im Stator zwei um 90° zueinander versetzte Spulen 3 angeordnet sind, wobei jede Spule zwei in Bezug auf den Rotor einander gegenüberliegende Teilwicklungen umfasst. In Fig. 3 ist eine Motorspule 3 mit ihrem elektrischen Ersatzschaltbild R_{w} und L_{w} dargestellt. Es sei betont, dass die Erfindung für Schrittmotoren mit einer beliebigen Anzahl an Phasen geeignet ist.

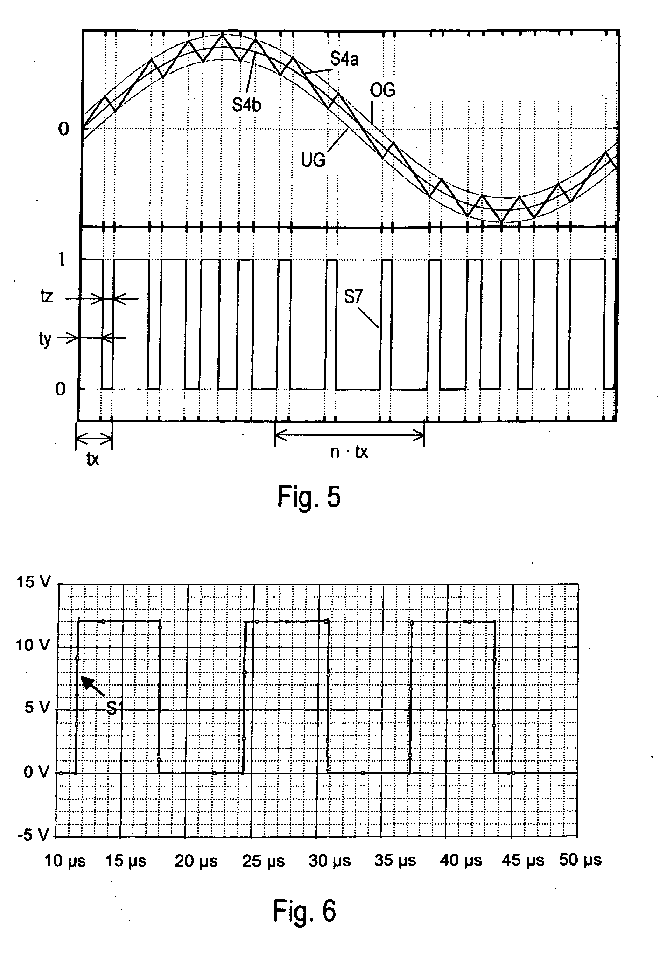

Die Motorsteuerung 1 realisiert eine so genannte "Strombandfiihrung", bei der der Strom I_{M} durch die jeweilige Motorspule L_{w} innerhalb einer unteren Schaltschwelle UG und einer oberen Schaltschwelle OG gehalten wird, wie aus der oberen Zeile des Signal-ZeitDiagramms von Fig. 5 hervorgeht. Die Ansteuerung erfolgt durch ein pulsweitenmoduliertes elektrisches Signal S 1 (siehe Fig. 6), der Strom des Signals S 1 wird durch die Induktivität L_{w} der Motorspule 3 geglättet , so dass sie einen angenäherten Sinusverlauf aufweisen, wie nachfolgend noch näher erläutert wird. Pro Phase (Spule 3) des Schrittmotors wird jeweils eine Motorsteuerung 1 benötigt, d.h. zwei im vorliegenden Beispiel eines Zweiphasenmotors, wobei die Ansteuerströme zueinander um eine Phase von 90° (allgemein 180° / Anzahl der Phasen) zueinander versetzt sind, d.h. im Fall eines Zwei-Phasenmotors eine Motorspule mit Sinusstrom und die andere mit Kosinusstrom angesteuert wird.

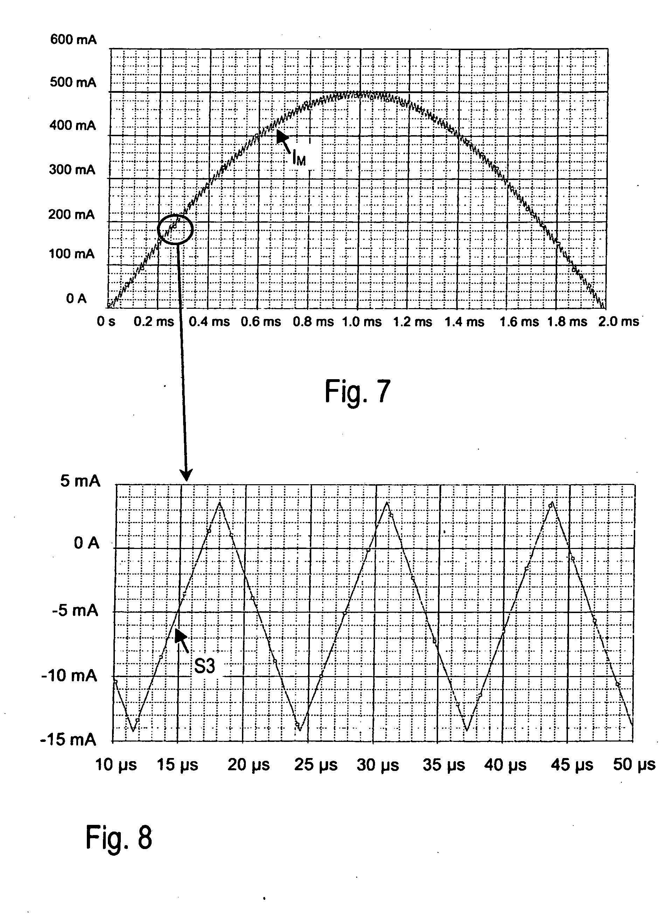

Um die Verluste klein zu halten, wird jede der Motorspulen 3 über jeweils einen Treiber 2, der eine H-Brücke umfasst (dargestellt im Schaltbild von Fig. 4) mittels einer so genannten "Locked-Antiphase-PWM" so angesteuert (siehe Signal S1, dargestellt in Fig. 6), dass durch die beiden Motorspulen 3 ein sinus- bzw. kosinusförmiger Strom fließt. Der Treiber 2 erhält an seinem Eingang ein PWM Signal S7, das noch näher erläutert wird. Weiters umfasst der Treiber 2 eine H-Brücke, bestehend aus zwei Halbbrücken, die jeweils aus zwei NMOS Transistoren M1, M2 bzw. M3, M4 aufgebaut sind. Die Spule 3 ist in den Querpfad zwischen den beiden Halbbrücken geschaltet. Das PWM Signal S7 wird einerseits den Transistoren M2, M4 unmittelbar als Steuersignal zugeführt, und andererseits über einen Inverter INV den Transistoren M1, M3 in invertierter Form zugeführt. Dadurch schalten die Transistoren immer diagonal ein oder aus, d.h. entweder sind die Transistoren M1 und M4 eingeschaltet und die Transistoren M2 und M3 ausgeschaltet, oder umgekehrt. Dies führt dazu, dass der pulsweitenmodulierte Strom S1 entweder in die eine oder die entgegengesetzte Richtung durch die Spule 3 fließt, wobei der pulsweitenmodulierte Strom S1 durch die Induktivität L_{W} der Spule 3 geglättet wird. Der sich durch die Glättung ergebende Strom I_{M} ist im Signal-Zeit-Diagramm von Fig. 7 dargestellt.

Der Strom I_{M} wird mittels eines in Serie mit der Motorspule geschalteten Shuntwiderstands gemessen und mittels eines Strom/Spannungswandlers 4 verstärkt. Fig. 8 zeigt die vergrößerte Darstellung eines Ausschnitts des Stromsignals I_{M} nach seiner Wandlung im Strom/Spannungswandlers 4 in ein Spannungssignal S3.

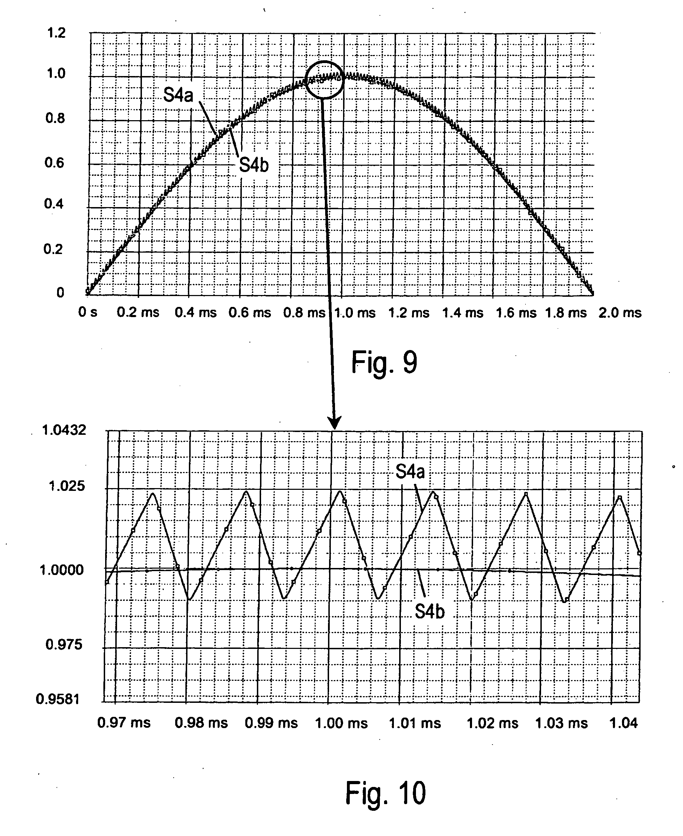

Optional ist dem Strom/Spannungswandler 4 noch ein HF-Filter 5 nachgeschaltet, um Hochfrequenz-Störungen im Spannungssignal S3 zu beseitigen, so dass sich ein von HF-Störungen bereinigtes Spannungssignal S4a ergibt, dass zum Strom I_{M} proportional ist. Dem daran anschließenden Differenzverstärker 6 wird einerseits das Spannungssignal S4a und andererseits ein (gestepptes) sinusförmiges Vorgabesignal (Sollwert) 4b zugeführt. Die beiden Signale S4a und S4b sind in Fig. 9 für eine halbe Sinusperiode bzw. in Fig. 10 in einer vergrößerten Darstellung des Scheitelbereichs des Sinusverlaufs dargestellt. Im Differenzverstärker 6 wird das Signal S4a (Istwert) vom Signal S4b (Sollwert) subtrahiert und verstärkt. Das Vorgabesignal S4b wird von einem D/A-Wandler 9, beispielsweise mit einer Auflösung von 12Bit erzeugt, wobei der D/A-Wandler 9 an seinem digitalen Eingang die Vorgabewerte vorzugsweise von einem FPGA 13 über eine darin gespeicherte Look-Up-Tabelle 14 zugewiesen bekommt.

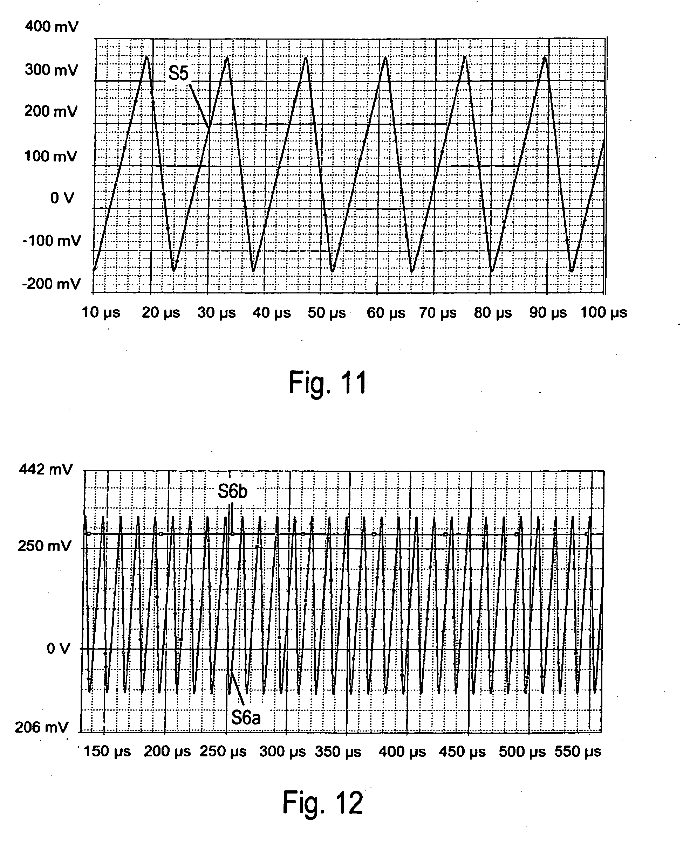

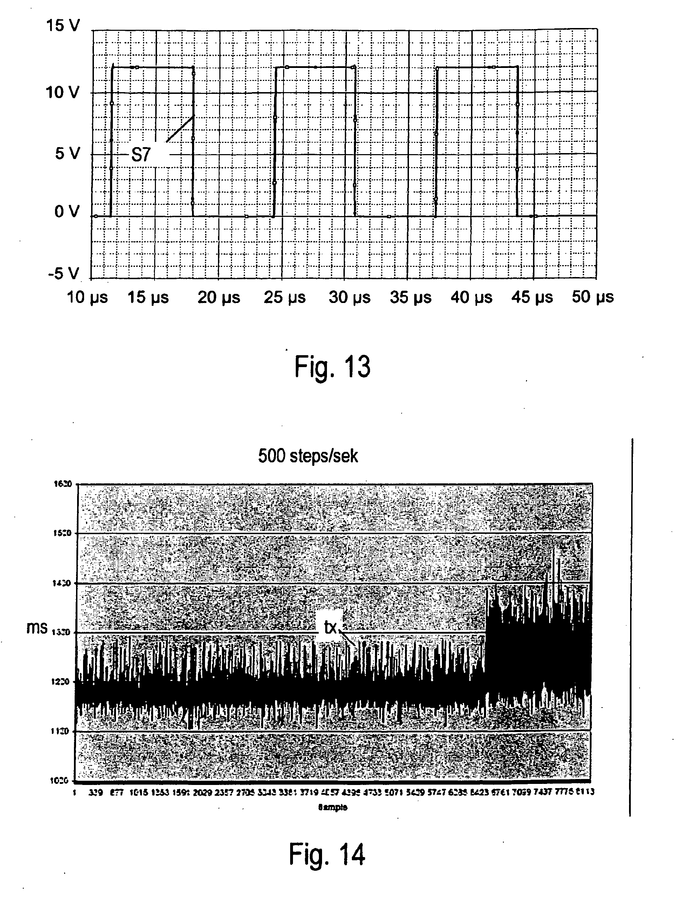

Das dreieckförmige Ausgangssignal S5 (siehe Fig. 11) des Differenzverstärkers 6 wird optional noch einmal in einem HF-Filter 7 gefiltert und als gefiltertes Signal S6a einem Eingang eines Präzisions-Schmitt-Triggers 8 zugeführt. Der Präzisions-Schmitt-Trigger 8 weist einen zweiten Eingang auf, an den ein in einer Referenzspannungsquelle 10 generiertes Referenzspannungssignal S6b angelegt wird, das die obere Schaltschwelle OG des Präzisions-Schmitt-Triggers 8 festlegt. Die beiden Signale S6a und S6b sind im Diagramm von Fig. 12 dargestellt. Die untere Schaltschwelle UG ist intern mit 0 V festgelegt. Die beiden Schaltschwellen OG, UG sind im Diagramm von Fig. 5 dargestellt, wobei sie ein Maß für die Bandbreite sind, innerhalb der sich der Strom I_{M} bzw. das zum Strom proportionale Spannungssignal S4a bezogen auf die sinusförmige Referenzspannung S4b ändern kann. Alternativ dazu könnte die untere Schaltschwelle UG des Präzisions-Schmitt-Triggers 8 mit einem zweiten Referenzspannungssignal eingestellt werden. Im Präzisions-Schmitt-Trigger 8 wird das Signal S6a mit den beiden Schaltschwellen UG, OG (hier 0V und 285mV) verglichen und es entsteht dadurch am Ausgang des Präzisions-Schmitt-Triggers ein pulsweitenmoduliertes (PWM) Signal S7 (siehe Fig. 13), dessen Frequenz von der Frequenz des Stroms I_{M} durch die Motorspule 3 bzw. des davon abgeleiteten Spannungssignals S4a abhängt, wobei der Anstieg und Abfall des Stroms I_{M} durch die Motorspule 3 wiederum von der sich mit der Last ändernden Induktivität L_{W} abhängig ist.

Die beiden Schaltschwellen UG, OG des Präzisions-Schmitt-Triggers 8 und die eingestellte Verstärkung des Differenzverstärkers 6 bestimmen die Höhe des Stromrippels (des Strombandes) durch die Motorspule 3, wie am besten im Zeitdiagramm von Fig. 5 zu sehen.

Das Steuersignal S7 des Präzisions-Schmitt-Triggers 8 wird einerseits einem Timer 11, der z.B. in den genannten FPGA 13 integriert sein kann, und zum anderen dem Eingang der Treiberstufe 2 zugeführt, wo es, wie oben beschrieben die H-Brücke für die Spule 3 ansteuert.

Der Timer 11 misst die variable Periode tx (siehe Fig. 5) des Steuersignals S7, die wie oben erläutert, von der mit der Motorlast veränderlichen Induktivität L_{W} der Motorspule 3 abhängt. In einer bevorzugten Ausgestaltung werden n Perioden um den Nullpunkt des Sinussignals S4b (z.B. um ca. ±30°) zur Messung herangezogen, wie in Fig. 5 dargestellt. Bei Messungen um den Nullpunkt kürzt sich eine gewisse Stromabhängigkeit der Messung aus dem Messergebnis. Alternativ zur Periodendauer tx kann auch die Einzeit ty oder die Auszeit tz des PWM Signals S7 gemessen werden, die ebenfalls von der veränderlichen Induktivität L_{W} der Motorspule 3 abhängen.

Die Schrittverlusterkennung gemäß der vorliegenden Erfindung basiert darauf, dass sich die Periodendauer tx mit der Motorlast verändert und im Falle eines Schrittverlusts chaotisch wird. Allerdings streuen durch Motorvibrationen und wechselndes Lastmoment auch ohne Schrittverlust die einzelnen Periodendauer-Messwerte, so dass aus einer Absolutwertmessung der Periodendauer tx nicht immer verlässlich auf einen Schrittverlust geschlossen werden kann. Auch der Ansatz, aus den Messwerten den Mittelwert zu errechnen, führt nicht immer verlässlich zum Ziel, da die gemessenen Periodendauern im Schrittverlustfall manchmal zwar extrem streuen, aber sowohl nach oben als auch nach unten, so dass sich der Mittelwert nicht immer deutlich verändert. Das ist insbesondere im Falle eines starren Anschlags des Rotors der Fall.

Bevorzugt wird daher vorgeschlagen, aus einer Vielzahl an Messungen der Periodendauer tx (oder eines Vielfachen davon) des Signals S7 den Maximalwert der Periodendauer tx zu ermitteln. Es hat sich nämlich gezeigt, dass im Falle eines Schrittverlustes unter den streuenden Werten der Periodendauer tx sehr hohe Werte auftreten. Ein solcher Maximalwert verändert sich zwar mit dem Lastmoment, springt im Schrittverlustfall tendenziell aber extrem nach oben.

Fig. 14 zeigt für ein Sample von 8096 Messwerten die bei einer Umdrehungsgeschwindigkeit von 500 Schritten pro Sekunde aufgenommenen Periodendauermesswerte tx. Dabei wurde der Motor (Typ.E21 H4N-2.5-012) zunächst im Leerlauf betrieben und nach ca. 7000 Samples aufgehalten, sodass er ab diesem Zeitpunkt kontinuierlich Schritte verlor. Man erkennt den deutlichen Anstieg der Periodendauern ab dem 7000. Sample. Der Unterschied der Periodendauern zwischen Leerlauf und Anhalten des Motors fällt umso geringer aus, je langsamer der Motor dreht. Unterhalb einer Mindestdrehzahl wird die Schrittverlusterkennung daher unzuverlässig. Umgekehrt ist der Unterschied der Periodendauern zwischen Leerlauf und Anhalten des Motors umso größer, je höher die Drehzahl des Motors ist. Dies erleichtert es, eine obere Schrittverlustschwelle tmax der Periodendauer festzulegen, deren Überschreiten als Schrittverlust detektiert werden kann.

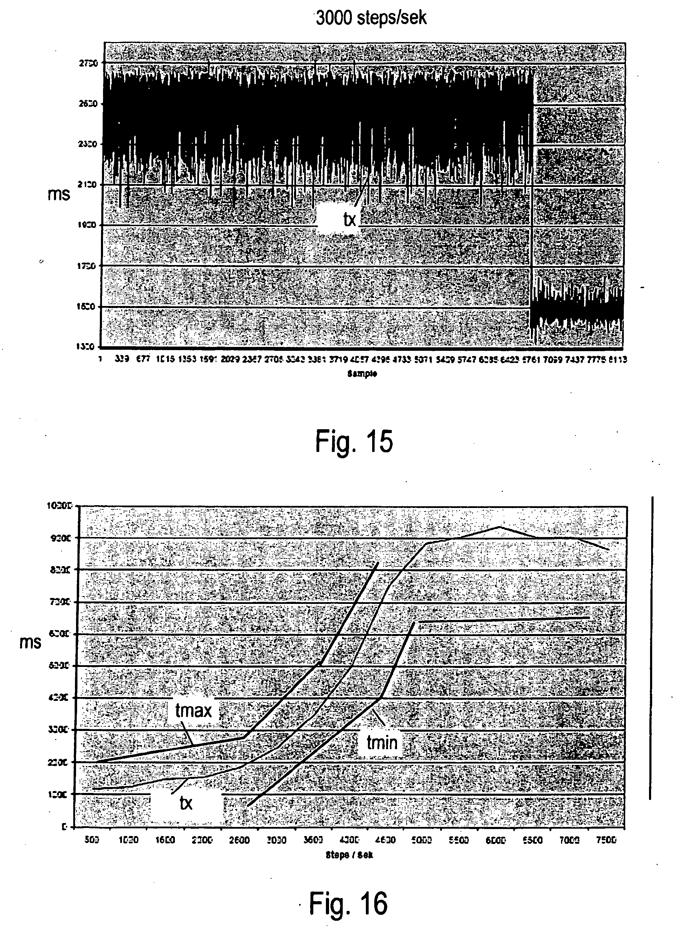

Ab einer motorabhängigen Maximalgeschwindigkeit kehrt sich der Effekt um, da der Motor nun seine Start/Stopp-Frequenz überschreitet. Er kann nach dem ersten Schrittverlust nicht mehr anfahren und vibriert nur mehr um seine Ruhelage. Damit nimmt er aber keine Energie mehr auf und der Strom kann leichter in die Wicklungen gebracht werden, wobei die Stromfrequenz steigt und die Periodendauer tx sinkt, wie in Fig. 15 deutlich zu sehen ist. Auch dieser Effekt verstärkt sich mit der Geschwindigkeit des Motors. Das Diagramm von Fig. 15 wurde bei einer Motorgeschwindigkeit von ca. 3000 Steps/sek aufgenommen. Somit ist es, wenn man den Schrittmotor nicht nur bei einer Geschwindigkeit weit unter seiner Start/Stopp-Frequenz betreiben möchte, für eine verlässliche Schrittverlusterkennung empfehlenswert, die gemessene Periodendauer tx auch mit einer unteren Schrittverlustschwelle tmin zu vergleichen und einen Schrittverlust zu detektieren, wenn diese untere Schrittverlustschwelle tmin unterschritten wird.

Fig. 16 zeigt ein Diagramm der Abhängigkeit der Periodendauer tx von der Drehzahl des Schrittmotors, wobei in Abständen von 500 Steps/sek die Periodendauer tx jeweils als Mittelwert aus 5000 Messwerten berechnet und im Diagramm eingetragen wurde.

In der Praxis wird der getestete Steppermotor zweckmäßig in einem Frequenzbereich von 600 bis ca. 2500 Steps/sek. betrieben. In diesem Bereich ist die Kurve relativ linear, wodurch die obere Schrittverlustschwelle tmax nicht als Lookup-Tabelle für jede einzelne Geschwindigkeit festgelegt werden muss, sondern auch durch eine Gerade oder eine Funktion höherer Ordnung angenähert werden kann, wie in Fig. 16 dargestellt. Die obere Schrittverlustschwelle tmax kann für Werte über 2500 Steps/sek aus einzelnen Geradenstücken zusammengesetzt werden.

Man erkennt aus dem Diagramm von Fig. 16 auch, dass ab ca. 4000 Steps/sek die Periodendauer tx unverhältnismäßig stark ansteigt und ab ca. 5500 Steps/sek einigermaßen konstant bleibt. Allerdings genügen bei diesen hohen Drehzahlen bereits geringe Motorlasten, um den Schrittmotor außer Tritt zu bringen bzw. kommt der Motor in die Nähe seiner mechanischen Grenze. Da der Motor bei diesen Geschwindigkeiten über seiner Start/Stop-Frequenz betrieben wird, genügen einzelne Schrittverluste für ein völliges Außer-Tritt-Fallen des Motors. Das heißt, maßgebend für die Schrittverlusterkennung ist in diesem Geschwindigkeitsbereich die untere Schrittverlustschwelle tmin. Es ist dabei zu beachten, dass die Begriffe untere Schrittverlustschwelle tmin und obere Schrittverlustschwelle tmax keine absoluten Werte bezeichnen, sondern sich, ebenso wie die Periodendauer tx, mit der Motordrehzahl ändern. Außerdem sollte der Motor auch nicht auf Dauer mit höheren Geschwindigkeiten betrieben werden, da die Belastung der Lager extrem groß wird und damit die Lebensdauer des Motors stark abnimmt. Wie gesagt, ist für den getesteten Motor ein Geschwindigkeitsbereich von 600 bis ca. 2500 Steps/sek empfehlenswert. Für andere Motoren können davon abweichende Geschwindigkeitsbereiche angegeben werden.

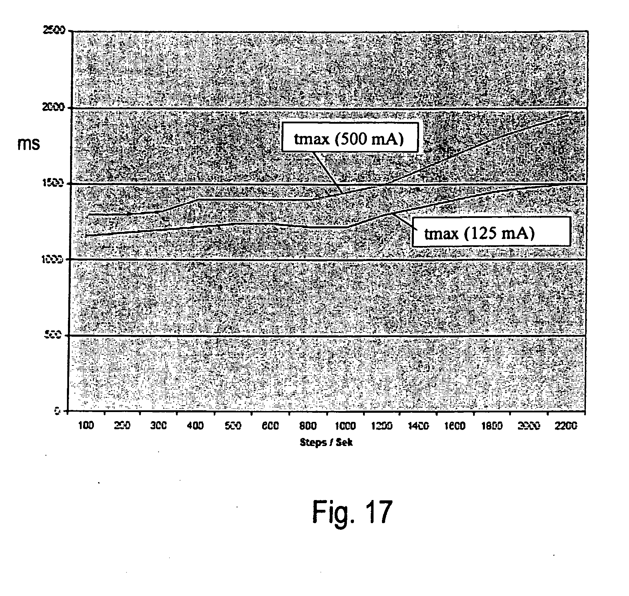

Bei den bisherigen Erklärungen wurde angenommen, dass der Motor mit Nennstrom betrieben wird. Doch die gemessenen Periodendauern tx sind auch vom Wicklungsstrom abhängig. Daher wurden in einem weiteren Versuch für denselben Motor wie vorhin empirisch funktionierende obere Schrittverlustschwellen tmax für die Schrittverlusterkennung bei Nennstrom (500mA/Wicklung) und bei 25% des Nennstroms (125mA/Wicklung) ermittelt. Die Ergebnisse sind in Fig. 17 dargestellt. Man erkennt aus dem Diagramm von Fig. 17, dass die Schrittverlustschwellen über einen relativ weiten Frequenzbereich annähernd gleich bleiben und dann ab einer Knickfrequenz linear steigen. Allerdings verschiebt sich die Kurve mit sinkendem Strom zu kleinen Werten hin, und die Knickfrequenz ändert sich ebenso. Das bedeutet in der Praxis, dass im FPGA 13 o. dergl. eine Lookup-Tabelle für die Schrittverlustschwellen tmax, tmin angelegt oder die jeweilige Schrittverlustschwelle intern gemäß einer Funktion oder stückweise zusammengesetzten Funktionen berechnet werden muss. Wenn eine Stromregelung implementiert werden soll, d.h. der Motor nicht nur bei Nennstrom betrieben wird, wird die Lookup-Tabelle zweidimensional. In der Praxis ist die Anzahl der unterschiedlichen Geschwindigkeiten, bei denen ein Schrittmotor betrieben wird, begrenzt, was die Größe der Lookup-Tabelle wiederum verkleinert.

Mit der Erfindung können auch mehrere Motoren ressourcenschonend gleichzeitig von einem FPGA angesteuert werden, wobei die Abarbeitung der Reihe nach im FPGA erfolgt, z.B. mittels einer implementierten State-Machine, die diese Aufgabe übernimmt. Dadurch muss die Motoransteuerung und auch die Schrittverlusterkennung nicht mehrfach instanziert werden.

Die Schaltschwellen des Schmitt-Triggers 8 sind an unterschiedliche Motoren anpassbar.

Um eine Motoransteuerung 1 zu realisieren, die für unterschiedliche Motortypen geeignet sein soll, müssen Schrittverlustschwellen-Funktionen oder Schrittverlust-Lookup-Tabellen für alle vorgesehenen Motortypen erstellt werden. Dieser Prozess wird zweckmäßig automatisiert an einem Prüfstand vorgenommen, der die Motorkennlinien automatisch aufnimmt und in einem Speicher bzw. im FPGA 13 ablegt.

In einfachen Anwendungen, bei denen es genügt, Schrittverluste mit einer Genauigkeit von einer Motorumdrehung festzustellen, braucht die vorgeschlagene Periodendauermessung nur an einer Spule 3 bzw. deren Ansteuerschaltung 1 realisiert sein, wobei dann die Ansteuerschaltung 1 auch die Ansteuerung der Treiber der anderen Spulen des Motors mit einem festen Phasenversatz vornimmt. Für genauere Anwendungen ist es jedoch empfehlenswert, für jede Motorspule eine Ansteuerschaltung 1 mit der erfindungsgemäßen Periodendauermessung vorzusehen, so dass die Genauigkeit der Schrittverlusterkennung eine Schrittlänge zwischen zwei benachbarten Motorspulen beträgt.

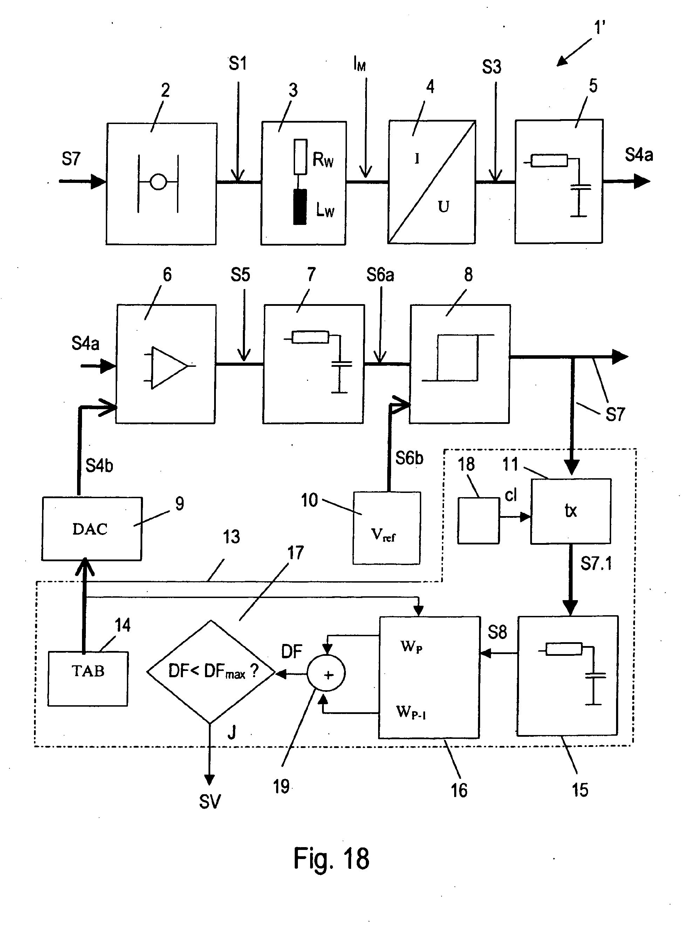

Es folgt nun anhand des Blockschaltbilds von Fig. 18 eine Erläuterung einer zweiten Ausführungsform einer erfindungsgemäßen Motorsteuerung 1' mit Schrittverlusterkennung für einen Schrittmotor. Gleiche Komponenten dieser Motorsteuerung 1' wie in der ersten Ausführungsform der Motorsteuerung 1 sind mit gleichen Bezugszeichen versehen. Zur Erklärung ihrer Funktionen wird auf die obige Beschreibung der ersten Ausführungsform der Motorsteuerung 1 verwiesen. Die zweite Ausführungsform der Motorsteuerung 1' mit Schrittverlusterkennung unterscheidet sich von der ersten im Wesentlichen durch eine andere Auswertung des Steuersignals S7 zur Schrittverlusterkennung. Genauer gesagt, wird das Steuersignal S7 mit einer vorgegebenen Taktfrequenz abgetastet und die Abtastwerte 57.1 einem Tiefpassfilter 15 zugeführt. Dieses Tiefpassfilter 15 ist vorzugsweise ein Filter höherer Ordnung und kann beispielsweise als analoges Tiefpassfilter oder als ein einem analogen Tiefpassfilter nachgebildetes digitales Filter konfiguriert sein. Für einen Ressourcen schonenden Verbrauch an Schaltkreisen im FPGA 13 werden z.B. drei analoge Tiefpassfilter 1. Ordnung mathematisch vereinfacht nachgebildet und hintereinander geschaltet. Der Filterkoeffizient für jedes Filter wird dabei so gewählt, dass zum einen die Schaltfrequenz S7, die aufgrund des Vorgabesignals S4b generiert wird (typischerweise ca. 70 KHz), gut unterdrückt wird ( > 60dB), und zum anderen das weiter unten erläuterte Differenzsignal DF bei Auftreten von Schrittverlusten möglichst wenig gedämpft wird. Das gefilterte Signal S8 weist im Wesentlichen dieselbe Periode auf wie der Strom I_{M}. Das gefilterte Signal S8 wird mit einer vorgegebenen, von einem Taktgenerator 18 im FPGA 13 erzeugten Taktfrequenz c1 abgetastet und die Abtastwerte des gefilterten Signals S8 werden in einem Speicher 16 gespeichert. Die Taktfrequenz korrespondiert mit jenen Zeitpunkten, zu denen das FPGA 13 einen neuen Microstep vorgibt und ein voller PWM-Zyklus zu Ende ist.

Es sei erwähnt, dass das gefilterte Signal S8 am Ausgang des Tiefpassfilters 15 entweder bereits in digitaler Form vorliegt, so dass das "Abtasten" nur mehr in einem Einschreiben der digitalen Werte in den Speicher 16 mit der Taktrate cl besteht, oder in analoger Form vorliegt, was das Zwischenschalten eines Analog/Digitalwandlers zwischen Filterausgang und Speicher erfordert. Differenzbildungsmittel 19 errechnen aus jeweils zwei Abschnitten aus zumindest einer im Speicher 16 gespeicherten Periode des gefilterten Signals S8 ein Differenzsignal DF. Vergleichsmittel 17 vergleichen das Differenzsignal DF mit einer (z.B. im FPGA 13 vorgespeicherten) Schrittverlustschwelle DFₘₐₓ, und generieren bei Erreichen oder Überschreiten der Schrittverlustschwelle DFₘₐₓ ein den Schrittverlust SV repräsentierendes Ausgangssignal.

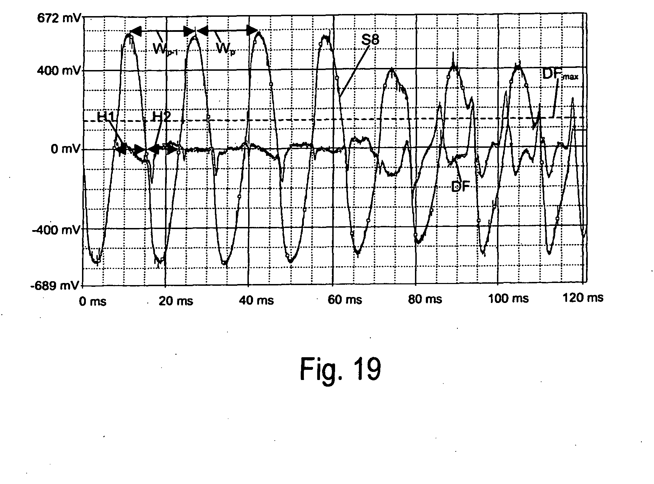

Fig. 19 zeigt in einem Zeitdiagramm den zeitlichen Verlauf des gefilterten Signals S8 und des Differenzsignals DF. Dabei wurde das Differenzsignal DF jeweils durch Summation der ersten Halbwelle H1 und einer zweiten Halbwelle H2 derselben Periode (z.B. Periode Wₚ oder Periode Wₚ₋₁ des gefilterten Signals S8 errechnet. Diese Berechnungsmethode verlangt geringen Hardware-Aufwand der Differenzbildungsmittel 19, allerdings sind in der Praxis deutliche Spikes im Differenzsignal DF erkennbar. Ein wesentlich glätteres Differenzsignal DF lässt sich erzielen, wenn die Differenzbildungsmittel 19 das Differenzsignal DF aus einer Subtraktion der Vollwelle einer (d.h. der aktuellen) Periode Wₚ von der Vollwelle der vorangegangenen Periode Wₚ₋₁ des gefilterten Signals S8 errechnen. Dadurch werden Störungen aufgrund unsymmetrischer Halbwellen eliminiert. Wie ersichtlich, findet ein Schrittverlust bei 70ms statt. Nach kurzer Verzögerung überschreitet das Differenzsignal DF die Schrittverlustschwelle DFₘₐₓ.

Allgemein bietet die zweite Motorsteuerung 1' gegenüber der ersten Motorsteuerung 1 den Vorteil, dass das Aufnehmen von zweidimensionalen Motordaten nicht erforderlich ist. Des Weiteren ist eine bessere Unterscheidung zwischen Normalbetrieb und Schrittverlust möglich, da sich der Signalpegel bei Schrittverlust um einen Faktor >10 unterscheidet.

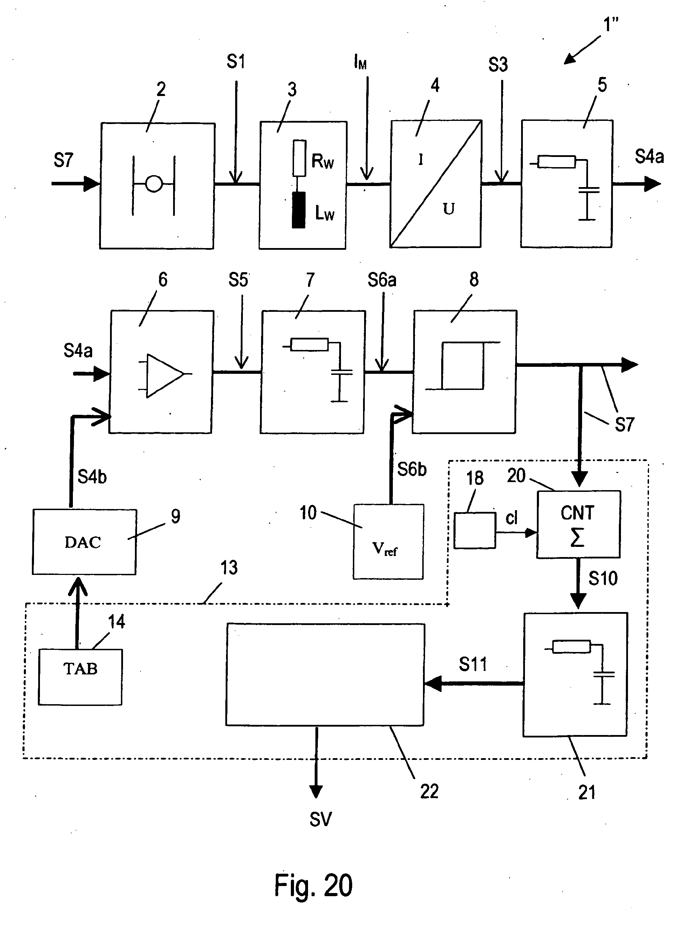

Es folgt nun anhand des Blockschaltbilds von Fig. 20 eine Erläuterung einer dritten Ausführungsform einer erfindungsgemäßen Motorsteuerung 1 " mit Schrittverlusterkennung für einen Schrittmotor. Gleiche Komponenten dieser dritten Motorsteuerung 1 " wie in den beiden oben erläuterten Ausführungsformen sind mit gleichen Bezugszeichen versehen. Zur Erklärung ihrer Funktionen wird auf die obige Beschreibung verwiesen.

Die dritte Ausführungsform der Motorsteuerung 1" mit Schrittverlusterkennung weist eine gegenüber den beiden ersten Ausführungsformen unterschiedliche Auswertung des Steuersignals S7 zur Schrittverlusterkennung auf, indem das Steuersignal S7 durch ein erstes Tiefpassfilter 20 geführt wird, das vorgefilterte Signal S10, das im Wesentlichen dieselbe Periode aufweist wie der Strom I_{M}, in einem zweiten Tiefpassfilter 21 weiter geglättet wird und das gefilterte und geglättete Signal S11 anschließend Rechenmitteln 22 zugeführt wird, in denen es einer Kurvendiskussionsrechnung, insbesondere einer Gradientenanalyse, unterzogen wird, aus der detektierbar ist, ob ein Schrittverlust SV aufgetreten ist.

Das erste Tiefpassfilter 20 ist als digitaler Integrator ausgebildet, der einen Zähler CNT aufweist, der, wenn das Steuersignal S7 High-Pegel aufweist, mit vorgegebener Taktfrequenz cl, die von einem Taktgeber 18 erzeugt wird, hinaufzählt, und wenn das Steuersignal S7 Low-Pegel aufweist, mit vorgegebener Taktfrequenz hinunterzählt. Es versteht sich natürlich, dass der Integrator so variiert werden kann, dass bei Low-Pegel ein Hinaufzählen des Zählers erfolgt und bei High-Pegel ein Hinunterzählen.

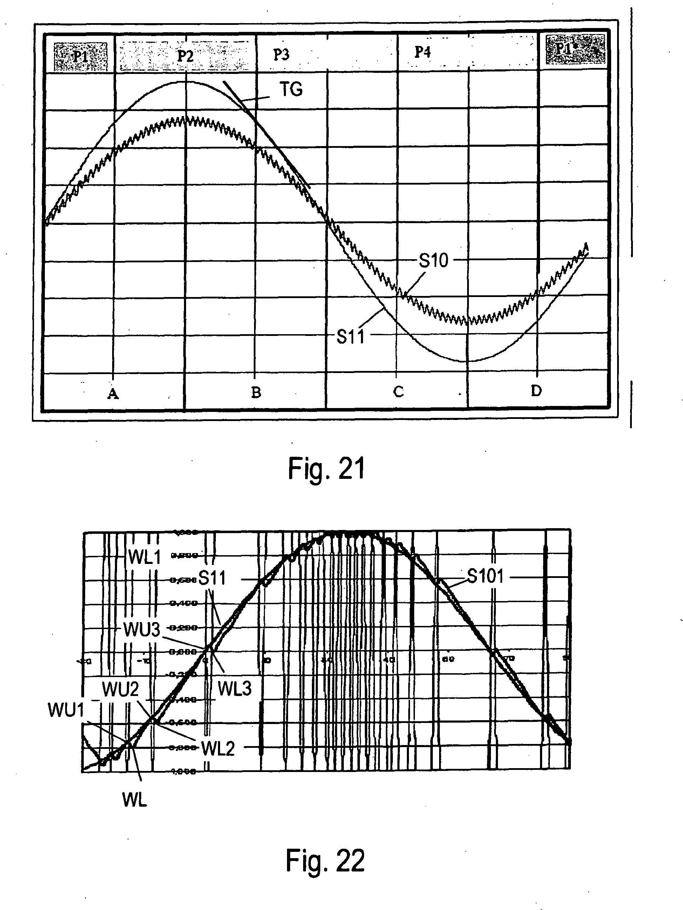

Durch das permanente Aufsummieren (Integration) des PWM Steuersignals S7 wird der Motorstrom ohne Berücksichtigung der Verluste in etwa nachgebildet. Mit dieser Methode werden Spikes infolge von Artefakten der Schaltung übergangen und die gewünschte globale Betrachtung der Kurve ermöglicht. In der Praxis stellen sich die gewonnen Kurven (siehe Signaldiagramme der Figuren 21 und 22) als weitgehend homogene Sinuswellen dar (abgesehen von Sättigungseffekten), denen eine Steigungsgerade überlagert ist. Diese entspricht den in der rein mathematischen Summe (= Integral des idealen Sinus) nicht vorhandenen Verlusten der physikalischen Anordnung (Elektronik + Motor), die real von der PWM ausgeregelt werden. Die globale Diskussion des gefilterten Signals S11 ermöglicht diverse Ähnlichkeitsbetrachtungen, wie z.B. der qualitative Vergleich von Kurven einander entsprechender Motorphasen. Notwendig ist hierbei u.U. eine Korrektur bzw. Rücksetzung des Integrals aufgrund der permanenten Verluste, so dass die technische Realisation in Form der mathematischen Berechung möglich wird (kein Weglaufen).

Das dem ersten Tiefpassfilter 20 nachgeschaltete zweite Tiefpassfilter 21 ist als diskretes Filter ausgebildet, dessen diskrete Filterpunkte Wendepunkte WL1, WL2, WL3 bzw. WU1, WU2, WU3 des gefilterten Signals S10 sind, siehe Signaldiagramm von Fig. 22, aus dem auch ersichtlich ist, dass das im zweiten Tiefpassfilter 21 gefilterte Signal S 11 einen wesentlich glätteren Verlauf aufweist.

Für das diskrete Filter 21 lässt sich eine Filterfunktion festlegen, indem nur die oberen Wendepunkte WU1, WU2, WU3 des vorgefilterten Signals S10 als diskrete Filterpunkte verwendet werden. Eine weitere Filterfunktion wird festgelegt, indem nur die unteren Wendepunkte WL1, WL2, WL3 des gefilterten Signals S10 verwendet werden. Die obere und untere Filterfunktion bilden ein Band, das ein Maß für die Amplitude der Regelung ist. Ist dieses Regelungsband schmal, so befindet man sich im Bereich des Maximums oder Minimums der sinusförmigen Kurve. Diese Information wird verwendet, wenn die Tangente TG (siehe Fig. 21) ermittelt wird, d.h. eine Gradientenanalyse durchgeführt wird, denn die Gradientenanalyse funktioniert im Bereich des Maximums und Minimums nicht immer verlässlich, daher werden diese Bereiche bei der Gradientenanalyse ausgeblendet. Die Ermittlung der Kurvensteigungen (TG) kann kontinuierlich oder abschnittsweise erfolgen, wobei bei abschnittsweiser Ermittlung zweckmäßig eine gemittelte Abschnitts-Kurvensteigung errechnet wird. Zur Verringerung des Rechenaufwandes kann anstelle einer gemittelten Abschnitts-Kurvensteigung einfach eine Fällt/Steigt-Entscheidung getroffen werden, wobei mehrere Abschnitte P1, P2, P3, P4 bzw. A, B, C, D zu Gruppen zusammengefasst werden, die jeweils bezüglich Schrittverlusterkennung bewertet werden. Die Gruppen können sich auch überlappen, wie in Fig. 21 zu sehen, wo jeder Abschnitt jeder Gruppe einen 90° Winkel umfasst, die Abschnitte der unterschiedlichen Gruppen aber 45° zueinander versetzt sind.

Die Berechnung der Steigung des gefilterten Signals S 11 zur Ermittlung von Schrittverlusten basiert auf der Überlegung, dass der Steigungsverlauf zumindest über Teilabschnitte monoton sein muss und dass das Auftreten von unerwarteten Steigungszuständen oder - änderungen während bestimmter Motorphasen auf einen Schrittverlust hindeutet. So ist es z.B. möglich, die korrekte Abfolge der Steigungswechsel im Sinus und Cosinus-Zweig der Motoransteuerung zu betrachten und die aktuelle Drehrichtung des Motors zu ermitteln. Durch Beobachtung der ermittelten Nulldurchgänge, können die Schritte des Schrittmotors mitgezählt werden.

In Erweiterung obiger Überlegung sind die Rechenmittel 22 zur Ermittlung der Ableitungen der Kurvensteigungen (TG), d.h. der Kurvenkrümmungen, ausgebildet. Diese Maßnahme basiert auf der Überlegung, dass während bestimmter Motorphasen eine Monotonie für die Steigung selbst angenommen werden: Das Signum der Krümmung muss innerhalb der ermittelten Wendepunkte konstant sein.

Die Verdeutlichung des Monotonieprinzips der Perioden erfolgt anhand des gefilterten Signals S11 gemäß der Darstellung von Fig. 22. Zwischen zwei Nulldurchgängen verdichtet sich die Periodendauer einmalig, d.h. es gibt nur einen Extremwert des Signals S 11. Dort ist die Periodendauer minimal und die Amplitude maximal. Hieraus folgt: Im gesamten Bereich muss die zweite Ableitung der Kurve permanent negativ sein. Dem gemäß muss während der negativen Halbwelle die ermittelte zweite Ableitung positiv sein. Dies ist hier der Fall, woraus zu schließen ist, dass kein Schrittverlustfall vorliegt.

## Patentansprüche

1. Verfahren zum Erkennen von Schrittverlusten eines Schrittmotors, umfassend das Zuführen einer pulsweitenmodulierten (PWM) Spannung (S1) zu einer Spule (3) des Schrittmotors, das Erfassen des durch die Spule (3) fließenden Stroms (I_{M}), das Vergleichen, ob der erfasste Strom (I_{M}) bezogen auf einen, insbesondere weitgehend sinusförmigen, Vorgabewert (S4b) innerhalb einer durch eine obere Schaltschwelle (OG) und eine untere Schaltschwelle (UG) definierten Strombandbreite liegt, **gekennzeichnet durch** das Einschalten der Stromzufuhr (S1) zur Spule (3), wenn der erfasste Strom (I_{M}) auf den unteren Schwellwert (UG) abgesunken ist und das Abschalten der Stromzufuhr (S1) zur Spule (3), wenn der erfasste Strom (I_{M}) auf den oberen Schwellwert (OG) gestiegen ist, wobei der Signalverlauf des Stroms (I_{M}) bzw. dessen Veränderung analysiert und Abweichungen von Sollwerten bzw. Sollwertebereichen detektiert werden, die **durch** Schrittverluste verursacht wurden, wobei die Ermittlung des Signalverlaufs des Stroms (I_{M}) bzw. dessen Veränderung indirekt **durch** Analysieren eines korrespondierenden Steuersignals (S7) erfolgt, wobei vor dem Vergleichen mit der oberen Schaltschwelle (OG) und der unteren Schaltschwelle (UG) der erfasste Strom (I_{M}) bzw. ein zum erfassten Strom proportionales Spannungssignal (S3, S4a) vom Vorgabewert (S4b) subtrahiert und optional verstärkt wird, wobei das Vergleichen des zum erfassten Strom (I_{M}) proportionalen Spannungssignals (S3, S4a) mit der oberen Schaltschwelle (OG) und der unteren Schaltschwelle (UG) in einem Schmitt-Trigger (8), vorzugsweise einem Präzisions-Schmitt-Trigger, durchgeführt wird, der an seinem Ausgang ein Steuersignal (S7) liefert, und wobei das Steuersignal (S7) am Ausgang des Schmitt-Triggers (8) einen Treiber (2) zur Erzeugung der PWM-Spannung (S 1) zur Zufuhr zur Spule (3) ansteuert.

2. Verfahren nach Anspruch 1, **dadurch gekennzeichnet, dass** der Vorgabewert (S4b) in einem Digital/Analog-Wandler (9) erzeugt wird, der an seinem digitalen Eingang die Werte von einem Controller, z.B. ein FPGA (13), zugewiesen bekommt.

3. Verfahren nach Anspruch 1 oder 2, **dadurch gekennzeichnet, dass** die Anstiegszeit (ty) des Stroms (I_{M}) von der unteren Schaltschwelle (UG) zur oberen Schaltschwelle (OG) oder die Abfallzeit (tz) des Stroms (I_{M}) von der oberen Schaltschwelle (OG) zur unteren Schaltschwelle (UG) oder die aus Anstiegszeit (ty) und Abfallzeit (tz) zusammengesetzte Periodendauer (tx) bzw. ein Vielfaches davon gemessen und mit einer oberen Schrittverlustschwelle (tmax) verglichen wird, bei deren Überschreiten ein Schrittverlust detektiert wird, wobei vorzugsweise die obere Schrittverlustschwelle (tmax) in Abhängigkeit von der Motorgeschwindigkeit oder vom Motortyp oder vom Motorstrom ausgewählt wird.

4. Verfahren nach Anspruch 1 oder 2, **dadurch gekennzeichnet, dass** die Anstiegszeit (ty) des Stroms (I_{M}) von der unteren Schaltschwelle (UG) zur oberen Schaltschwelle (OG) oder die Abfallzeit (tz) des Stroms (I_{M}) von der oberen Schaltschwelle (OG) zur unteren Schaltschwelle (UG) oder die aus Anstiegszeit (ty) und Abfallzeit (tz) zusammengesetzte Periodendauer (tx) bzw. ein Vielfaches davon gemessen und mit einer unteren Schrittverlustschwelle (tmin) verglichen wird, bei deren Unterschreiten ein Schrittverlust detektiert wird, wobei vorzugsweise die untere Schrittverlustschwelle (tmin) in Abhängigkeit von der Motorgeschwindigkeit oder vom Motortyp oder vom Motorstrom ausgewählt wird.

5. Verfahren nach einem der Ansprüche 3 oder 4, **dadurch gekennzeichnet, dass** die obere Schrittverlustschwelle (tmax) und/oder die untere Schrittverlustschwelle (tmin) in Lookup-Tabellen in einem Speicher abgelegt oder als Funktionen oder stückweise zusammengesetzte Funktionen von einem Controller, z.B. ein FPGA (13), errechnet werden.

6. Verfahren nach Anspruch 1, **dadurch gekennzeichnet, dass** das Steuersignal (S7) mit einer vorgegebenen Taktfrequenz abgetastet und die Abtastwerte (7.1) einer Tiefpassfilterung unterzogen werden, wobei das gefilterte Signal (S8), das im Wesentlichen dieselbe Periode aufweist wie der Strom (I_{M}), bei jeder Microstep-Änderung und vollendeter Periodendauer in einem Speicher(16) gespeichert und aus jeweils zwei Abschnitten aus zumindest einer Periode des gefilterten Signals (S8) ein Differenzsignal (DF) errechnet und mit einer Schrittverlustschwelle (DFₘₐₓ) verglichen wird, bei deren Erreichen ein Schrittverlust (SV) detektiert wird.

7. Verfahren nach Anspruch 6, **dadurch gekennzeichnet, dass** das Differenzsignal (DF) aus einer ersten Halbwelle (H1) und einer zweiten Halbwelle (H2) derselben Periode (Wₚ) errechnet wird, wobei vorzugsweise die an einem Nulldurchgang beginnenden Halbwellen herangezogen werden.

8. Verfahren nach Anspruch 6, **dadurch gekennzeichnet, dass** das Differenzsignal (DF) aus der Vollwelle einer Periode (Wₚ) und der Vollwelle der vorangegangenen Periode (Wₚ₋₁) des gefilterten Signals (S8) errechnet wird.

9. Verfahren nach Anspruch 1, **dadurch gekennzeichnet, dass** das Steuersignal (S7) einer Tiefpassfilterung, vorzugsweise durch Integration, unterzogen wird und das gefilterte Signal (S10), das im Wesentlichen dieselbe Periode aufweist wie der Strom (I_{M}), einer Kurvendiskussion, insbesondere einer Gradientenanalyse, unterzogen wird, wobei, wenn die Ergebnisse der Kurvendiskussion außerhalb festgelegter Grenzen liegen, ein Schrittverlust (SV) detektiert wird.

10. Verfahren nach Anspruch 9, **dadurch gekennzeichnet, dass** die Integration durch das Hinaufzählen eines Zählers mit vorgegebener Taktfrequenz, wenn das Steuersignal High-Pegel aufweist und das Hinunterzählen eines Zählers mit vorgegebener Taktfrequenz, wenn das Steuersignal Low-Pegel aufweist, erfolgt.

11. Verfahren nach Anspruch 9 oder 10, **dadurch gekennzeichnet, dass** die Kurvendiskussion die Ermittlung von Kurvensteigungen (TG) und/oder deren Ableitungen, d.h. Kurvenkrümmungen, umfasst, wobei vorzugsweise die Kurvensteigungen (TG) bzw. deren Ableitungen kontinuierlich oder abschnittsweise ermittelt werden, wobei weiter bevorzugt bei abschnittsweiser Ermittlung eine gemittelte Abschnitts-Kurvensteigung errechnet wird.

12. Verfahren nach Anspruch 11, **dadurch gekennzeichnet, dass** mehrere Abschnitte (P1, P2, P3, P4; A, B, C, D) zu Gruppen zusammengefasst werden, die jeweils bezüglich Schrittverlusterkennung bewertet werden.

13. Vorrichtung (1) zum Erkennen von Schrittverlusten eines Schrittmotors, mit einem Treiber (2) zum Zuführen eines pulsweitenmodulierten (PWM) Stroms (S1) zu einer Spule (3) des Schrittmotors und einem Strom/Spannungswandler (4) zum Erfassen des durch die Spule (3) fließenden Stroms (I_{M}), wobei der Strom/Spannungswandler (4) ein zum erfassten Strom proportionales Spannungssignal (S3) liefert, umfassend Mittel (6, 8) zum Vergleichen, ob der erfasste Strom (I_{M}) bezogen auf einen Vorgabewert (S4b) innerhalb einer durch eine obere Schaltschwelle (OG) und eine untere Schaltschwelle (UG) definierten Strombandbreite liegt, **dadurch gekennzeichnet, dass** die Vergleichsmittel ein Steuersignal (S7) liefern, das den Treiber (2) so steuert, dass die Stromzufuhr (S1) zur Spule (3) eingeschaltet wird, wenn der erfasste Strom (I_{M}) auf den unteren Schwellwert (UG) abgesunken ist und die Stromzufuhr (S1) zur Spule (3) abgeschaltet wird, wenn der erfasste Strom (I_{M}) auf den oberen Schwellwert (OG) gestiegen ist, wobei Auswertemittel zum Analysieren des Signalverlaufs des Stroms (I_{M}) bzw. dessen Veränderung und zum Detektieren von durch Schrittverluste verursachte Abweichungen des Signalverlaufs des Stroms (I_{M}) bzw. dessen Veränderung von Sollwerten bzw. Sollwertebereichen vorgesehen sind, wobei die Auswertemittel den Signalverlauf des Stroms (I_{M}) bzw. dessen Veränderung aus dem Steuersignal (S7) analysieren, wobei die Vergleichsmittel einen Differenzverstärker (6) umfassen, dem an seinen beiden Eingängen der Vorgabewert (S4b) und das zum erfassten Strom proportionale Spannungssignal (S3, S4a) zur Subtraktion voneinander und optionalen Verstärkung des Differenzsignals zugeführt werden, wobei die Vergleichsmittel einen Schmitt-Trigger (8), vorzugsweise einen Präzisions-Schmitt-Trigger, umfassen, dem das Ausgangssignal (S5, S6a) des Differenzverstärkers (6) zugeführt wird, wobei die Hysterese des Schmitt-Triggers (8) die obere Schaltschwelle (OG) und die untere Schaltschwelle (UG) definiert und das Steuersignal am Ausgang des Schmitt-Triggers (8) den Treiber (2) zur Erzeugung des PWM-Stroms (S 1) zur Zufuhr zur Spule (3) ansteuert.

14. Vorrichtung nach Anspruch 13, **gekennzeichnet durch** einen Digital/Analog-Wandler (9) zur Erzeugung des, vorzugsweise annähernd sinusförmigen, Vorgabewerts (S4b), wobei der Digital/Analog-Wandler (9) an seinem digitalen Eingang die Werte von einem Controller, z.B. ein FPGA (13), zugewiesen bekommt.

15. Vorrichtung nach Anspruch 13 oder 14, **gekennzeichnet durch** einen Timer (11) zur Messung der Anstiegszeit (ty) des Stroms (I_{M}) von der unteren Schaltschwelle (UG) zur oberen Schaltschwelle (OG) oder der Abfallzeit (tz) des Stroms (I_{M}) von der oberen Schaltschwelle (OG) zur unteren Schaltschwelle (UG) oder der aus Anstiegszeit (ty) und Abfallzeit (tz) zusammengesetzten Periodendauer (tx) bzw. einem Vielfachen davon, und Vergleichsmitteln (12) zum Vergleich der gemessenen Zeitdauer mit einer oberen Schrittverlustschwelle (tmax), bei deren Überschreiten ein Schrittverlust (SV) detektiert wird.

16. Vorrichtung nach Anspruch 13 oder 14, **gekennzeichnet durch** einen Timer (11) zur Messung der Anstiegszeit (ty) des Stroms (I_{M}) von der unteren Schaltschwelle (UG) zur oberen Schaltschwelle (OG) oder der Abfallzeit (tz) des Stroms (I_{M}) von der oberen Schaltschwelle (OG) zur unteren Schaltschwelle (UG) oder der aus Anstiegszeit (ty) und Abfallzeit (tz) zusammengesetzten Periodendauer (tx) bzw. einem Vielfachen davon, und Vergleichsmitteln (12) zum Vergleich der gemessenen Zeitdauer mit einer unteren Schrittverlustschwelle (tmin), bei deren Unterschreiten ein Schrittverlust (SV) detektiert wird.

17. Vorrichtung nach Anspruch 15 oder 16, **dadurch gekennzeichnet, dass** die obere Schrittverlustschwelle (tmax) und/oder die untere Schrittverlustschwelle (tmin) in Lookup-Tabellen in einem Speicher abgelegt oder als Funktionen oder stückweise zusammengesetzte Funktionen von einem Controller, z.B. ein FPGA (13), errechnet werden.

18. Vorrichtung nach Anspruch 13 oder 14, **dadurch gekennzeichnet, dass** das Steuersignal (S7) mit einer vorgegebenen Taktfrequenz abgetastet und die Abtastwerte (7.1) einer Tiefpassfilterung unterzogen werden, wobei das gefilterte Signal (S8), das im Wesentlichen dieselbe Periode aufweist wie der Strom (I_{M}), bei jeder Microstep-Änderung und vollendeter Periodendauer in einem Speicher(16) gespeichert wird, wobei Differenzbildungsmittel (19) zur Errechnung eines Differenzsignals (DF) aus jeweils zwei Abschnitten aus zumindest einer im Speicher (16) gespeicherten Periode des gefilterten Signals (S8) und Vergleichsmittel (17) zum Vergleichen des Differenzsignals (DF) mit einer Schrittverlustschwelle (DFₘₐₓ), bei deren Erreichen ein Schrittverlust (SV) detektiert wird, vorgesehen sind.

19. Vorrichtung nach Anspruch 18, **dadurch gekennzeichnet, dass** die Differenzbildungsmittel (19) dazu ausgebildet sind, das Differenzsignal (DF) aus einer ersten Halbwelle (H1) und einer zweiten Halbwelle (H2) derselben Periode (Wₚ) zu errechnen, wobei vorzugsweise die an einem Nulldurchgang beginnenden Halbwellen herangezogen werden.

20. Vorrichtung nach Anspruch 18, **dadurch gekennzeichnet, dass** die Differenzbildungsmittel (19) dazu ausgebildet sind, das Differenzsignal (DF) aus der Vollwelle einer Periode (Wₚ) und der Vollwelle der vorangegangenen Periode (Wₚ₋₁) des gefilterten Signals (S8) zu errechnen.

21. Vorrichtung nach Anspruch 13 oder 14, **dadurch gekennzeichnet, dass** das Steuersignal (S7) durch ein Tiefpassfilter (20) geführt wird und das gefilterte Signal (S10), das im Wesentlichen dieselbe Periode aufweist wie der Strom (I_{M}), Rechenmitteln (22) zugeführt wird, die zur Kurvendiskussionsrechnung, insbesondere zur Gradientenanalyse, und zum Detektieren, ob die Ergebnisse der Kurvendiskussion aufgrund eines Schrittverlusts (SV) außerhalb festgelegter Grenzen liegen, ausgebildet sind.

22. Vorrichtung nach Anspruch 21, **dadurch gekennzeichnet, dass** das Tiefpassfilter (20) als Integrator ausgebildet ist, der vorzugsweise einen Zähler aufweist, der, wenn das Steuersignal (S7) High-Pegel aufweist, mit vorgegebener Taktfrequenz (cl) hinaufzählt, und wenn das Steuersignal Low-Pegel aufweist, mit vorgegebener Taktfrequenz hinunterzählt.

23. Vorrichtung nach Anspruch 21 oder 22, **dadurch gekennzeichnet, dass** die Rechenmittel (22) zur Ermittlung von Kurvensteigungen (TG) und/oder deren Ableitungen, d.h. Kurvenkrümmungen, ausgebildet sind, wobei vorzugsweise die Kurvensteigungen (TG) bzw. deren Ableitungen kontinuierlich oder abschnittsweise ermittelbar sind, wobei weiter bevorzugt bei abschnittsweiser Ermittlung eine gemittelte Abschnitts-Kurvensteigung errechnet wird.

## Claims

1. A process for detecting step losses of a stepper motor, comprising supplying a pulse-width modulated (PWM) voltage (S1) to a coil (3) of the stepper motor, detecting the current (I_{M}) flowing through the coil (3), comparing whether the detected current (I_{M}), based on a, particularly largely sinusoidal, default value (S4b), lies within a current bandwidth defined by an upper switching threshold (OG) and a lower switching threshold (UG), **characterized by** switching on the current supply (S1) to the coil (3) when the detected current (I_{M}) has dropped to the lower threshold (UG) and switching off the current supply (S1) to the coil (3) when the detected current (I_{M}) has risen to the upper threshold (OG), wherein the signal form of the current (I_{M}) or its change, respectively, is analyzed and deviations from desired values or desired value ranges, respectively, which have been caused by step losses, are detected, wherein the determination of the signal form of the current (I_{M}) or its change, respectively, occurs indirectly by analyzing a corresponding control signal (S7), wherein the detected current (I_{M}) or a voltage signal (S3, S4a) proportional to the detected current, respectively, is subtracted from the default value (S4b) and optionally amplified prior to a comparison with the upper switching threshold (OG) and the lower switching threshold (UG), wherein the comparison of the voltage signal (S3, S4a) proportional to the detected current (I_{M}) with the upper switching threshold (OG) and the lower switching threshold (UG) is performed in a Schmitt trigger (8), preferably a precision Schmitt trigger, which provides a control signal (S7) on its output, and wherein the control signal (S7) on the output of the Schmitt trigger (8) activates a driver (2) for generating the PWM voltage (S1) for supplying the coil (3).

2. A process according to claim 1, **characterized in that** the default value (S4b) is generated in a digital-to-analog converter (9) which has the values allocated to it on its digital input by a controller, e.g., an FPGA (13).

3. A process according to claim 1 or 2, **characterized in that** the rise time (ty) of the current (I_{M}) from the lower switching threshold (UG) to the upper switching threshold (OG) or the fall time (tz) of the current (I_{M}) from the upper switching threshold (OG) to the lower switching threshold (UG) or the period duration (tx) composed of rise time (ty) and fall time (tz) or a multiple thereof, respectively, is measured and compared to an upper step loss threshold (tmax), with a step loss being detected if said threshold is exceeded, with the upper step loss threshold (tmax) preferably being selected depending on the motor speed or the motor type or the motor current.

4. A process according to claim 1 or 2, **characterized in that** the rise time (ty) of the current (I_{M}) from the lower switching threshold (UG) to the upper switching threshold (OG) or the fall time (tz) of the current (I_{M}) from the upper switching threshold (OG) to the lower switching threshold (UG) or the period duration (tx) composed of rise time (ty) and fall time (tz) or a multiple thereof, respectively, is measured and compared to a lower step loss threshold (tmin), with a step loss being detected if said threshold is fallen short of, with the lower step loss threshold (tmin) preferably being selected depending on the motor speed or the motor type or the motor current.

5. A process according to claim 3 or 4, **characterized in that** the upper step loss threshold (tmax) and/or the lower step loss threshold (tmin) is/are stored in lookup tables in a memory or is/are calculated by a controller, e.g., an FPGA (13), as functions or as piecewise assembled functions.

6. A process according to claim 1, **characterized in that** the control signal (S7) is sampled at a predetermined clock frequency, and the sampled values (7.1) are subjected to low-pass filtering, wherein the filtered signal (S8), which has essentially the same period as the current (I_{M}), is stored in a memory (16) upon each microstep change and completed period duration und a differential signal (DF) is calculated from two sections each of at least one period of the filtered signal (S8) and is compared to a step loss threshold (DFₘₐₓ), with a step loss (SV) being detected if said threshold is reached.

7. A process according to claim 6, **characterized in that** the differential signal (DF) is calculated from a first half-wave (H1) and a second half-wave (H2) of the same period (Wₚ), with the half-waves being used for calculation preferably being those beginning at a zero crossing.

8. A process according to claim 6, **characterized in that** the differential signal (DF) is calculated from the full-wave of one period (Wₚ) and the full-wave of the preceding period (Wₚ₋₁) of the filtered signal (S8).

9. A process according to claim 1, **characterized in that** the control signal (S7) is subjected to low-pass filtering, preferably by integration, and the filtered signal (S10), which has essentially the same period as the current (I_{M}), is subjected to a curve discussion, in particular a gradient analysis, whereby a step loss (SV) is detected if the results of the curve discussion lie outside of fixed limits.

10. A process according to claim 9, **characterized in that** the integration is effected by a counter counting upwards at a predetermined clock frequency, if the control signal is on a high level, and a counter counting downwards at a predetermined clock frequency, if the control signal is on a low level.

11. A process according to claim 9 or 10, **characterized in that** the curve discussion comprises the determination of curve slopes (TG) and/or their derivations, i.e., curve bends, wherein the curve slopes (TG) or their derivations, respectively, are preferably determined continuously or in sections, wherein furthermore, for a determination in sections, an averaged section curve slope is preferably calculated.

12. A process according to claim 11, **characterized in that** several sections (P1, P2, P3, P4; A, B, C, D) are pooled in groups which, in each case, are evaluated with regard to the detection of step losses.

13. A device (1) for detecting step losses of a stepper motor, comprising a driver (2) for supplying a pulse-width modulated (PWM) current (S1) to a coil (3) of the stepper motor and a current/voltage transformer (4) for detecting the current (I_{M}) flowing through the coil (3), with the current/voltage transformer (4) providing a voltage signal (S3) proportional to the detected current, comprising means (6, 8) for comparing whether the detected current (I_{M}), based on a default value (S4b), lies within a current bandwidth defined by an upper switching threshold (OG) and a lower switching threshold (UG), **characterized in that** the comparison means provide a control signal (S7) which controls the driver (2) such that the current supply (S1) to the coil (3) is switched on when the detected current (I_{M}) has dropped to the lower threshold (UG) and the current supply (S1) to the coil (3) is switched off when the detected current (I_{M}) has risen to the upper threshold (OG), with evaluation means being provided for analyzing the signal form of the current (I_{M}) or its change, respectively, and for detecting deviations of the signal form of the current (I_{M}) caused by step losses or its variation, respectively, from desired values or desired value ranges, respectively, wherein the evaluation means analyze the signal form of the current (I_{M}) or its change, respectively, from the control signal (S7), wherein the comparison means comprise a differential amplifier (6) to which the default value (S4b) and the voltage signal (S3, S4a) proportional to the detected current are supplied on its two inputs for a subtraction from each other and an optional amplification of the differential signal, wherein the comparison means comprise a Schmitt trigger (8), preferably a precision Schmitt trigger, to which the output signal (S5, S6a) of the differential amplifier (6) is supplied, with the hysteresis of the Schmitt trigger (8) defining the upper switching threshold (OG) and the lower switching threshold (UG) and the control signal on the output of the Schmitt trigger (8) activating the driver (2) for generating the PWM current (S1) for supplying the coil (3).

14. A device according to claim 13, **characterized by** a digital-to-analog converter (9) for generating the, preferably approximately sinusoidal, default value (S4b), with the digital-to-analog converter (9) having the values allocated to it on its digital input by a controller, e.g., an FPGA (13).

15. A device according to claim 13 or 14, **characterized by** a timer (11) for measuring the rise time (ty) of the current (I_{M}) from the lower switching threshold (UG) to the upper switching threshold (OG) or the fall time (tz) of the current (I_{M}) from the upper switching threshold (OG) to the lower switching threshold (UG) or the period duration (tx) composed of rise time (ty) and fall time (tz) or a multiple thereof, respectively, and comparison means (12) for comparing the measured time period to an upper step loss threshold (tmax), with a step loss (SV) being detected if said threshold is exceeded.

16. A device according to claim 13 or 14, **characterized by** a timer (11) for measuring the rise time (ty) of the current (I_{M}) from the lower switching threshold (UG) to the upper switching threshold (OG) or the fall time (tz) of the current (I_{M}) from the upper switching threshold (OG) to the lower switching threshold (UG) or the period duration (tx) composed of rise time (ty) and fall time (tz) or a multiple thereof, respectively, and comparison means (12) for comparing the measured time period to a lower step loss threshold (tmin), with a step loss (SV) being detected if said threshold is fallen short of.

17. A device according to claim 15 or 16, **characterized in that** the upper step loss threshold (tmax) and/or the lower step loss threshold (tmin) is/are stored in lookup tables in a memory or is/are calculated by a controller, e.g., an FPGA (13), as functions or as piecewise assembled functions.

18. A device according to claim 13 or 14, **characterized in that** the control signal (S7) is sampled at a predetermined clock frequency, and the sampled values (7.1) are subjected to low-pass filtering, wherein the filtered signal (S8), which has essentially the same period as the current (I_{M}), is stored in a memory (16) upon each microstep change and completed period duration, with difference formation means (19) being provided for calculating a differential signal (DF) from, in each case, two sections of at least one period of the filtered signal (S8), which period is stored in the memory (16), and comparison means (17) being provided for comparing the differential signal (DF) to a step loss threshold (DFₘₐₓ). with a step loss (SV) being detected if said threshold is reached.

19. A device according to claim 18, **characterized in that** the difference formation means (19) are designed for calculating the differential signal (DF) from a first half-wave (H1) and a second half-wave (H2) of the same period (Wₚ), with the half-waves being used for calculation preferably being those beginning at a zero crossing.

20. A device according to claim 18, **characterized in that** the difference formation means (19) are designed for calculating the differential signal (DF) from the full-wave of one period (Wₚ) and the full-wave of the preceding period (Wₚ₋₁) of the filtered signal (S8).

21. A device according to claim 13 or 14, **characterized in that** the control signal (S7) is guided through a low-pass filter (20) and the filtered signal (S10), which has essentially the same period as the current (I_{M}), is supplied to arithmetic means (22) which are designed for a curve discussion calculation, in particular a gradient analysis, and for detecting whether the results of the curve discussion lie outside of fixed limits due to a step loss (SV).

22. A device according to claim 21, **characterized in that** the low-pass filter (20) is designed as an integrator which preferably comprises a counter which counts upwards at a predetermined clock frequency (cl), if the control signal (S7) is on a high level, and counts downwards at a predetermined clock frequency, if the control signal is on a low level.

23. A device according to claim 21 or 22, **characterized in that** the arithmetic means (22) are designed for determining curve slopes (TG) and/or derivations thereof, i.e., curve bends, wherein the curve slopes (TG) and their derivations, respectively, are preferably determinable continuously or in sections, wherein furthermore, for a determination in sections, an averaged section curve slope is preferably calculated.

## Revendications

1. Procédé pour reconnaître des pertes de pas d'un moteur pas à pas, comprenant les étapes consistant à alimenter une tension (S1) modulée en largeur d'impulsion (PWM) à une bobine (3) du moteur pas à pas, à détecter le courant (I_{M}) qui s'écoule à travers la bobine (3), à comparer si le courant détecté (I_{M}), par référence à une valeur prédéterminée (S4b), en particulier largement sous forme sinusoïdale, tombe à l'intérieur d'une bande de courant définie par un seuil de commutation supérieur (OG) et un seuil de commutation inférieur (UG), **caractérisé par** les étapes consistant à mettre en service l'alimentation de courant (S1) vers la bobine (3) quand le courant détecté (I_{M}) est descendu à la valeur seuil inférieure (UG) et à mettre hors service l'alimentation de courant (S1) vers la bobine (3) quand le courant détecté (I_{M}) est monté à la valeur seuil supérieure (OG), dans lequel on analyse l'évolution du signal du courant (I_{M}) ou respectivement sa variation et l'on détecte des écarts par rapport à des valeurs de consigne ou des plages de valeurs de consigne qui sont provoqués par des pertes de pas, dans lequel la détermination de l'évolution du signal de courant (I_{M}) ou respectivement sa variation a lieu indirectement par analyse d'un signal de commande correspondant (S7), dans lequel avant la comparaison avec le seuil de commutation supérieur (OG) et le seuil de commutation inférieur (UG) on soustrait le courant détecté (I_{M}) ou respectivement un signal de tension (S3, S4a) proportionnel au courant détecté, depuis la valeur prédéterminée (S4b) et en option on l'amplifie, dans lequel la comparaison du signal de tension (S3, S4a) proportionnel au courant détecté (I_{M}) avec le seuil de commutation supérieur (OG) et avec le seuil de commutation inférieur (UG) est exécutée dans une bascule de Schmitt (8), de préférence une bascule de Schmitt de précision, qui délivre à sa sortie un signal de commande (S7), et le signal de commande (S7) à la sortie de la bascule de Schmitt (8) pilote un circuit de pilotage (2) pour engendrer la tension PWM (S1) pour l'alimentation à la bobine (3).

2. Procédé selon la revendication 1, **caractérisé en ce que** la valeur prédéterminée (S4b) est engendrée dans un convertisseur numérique/analogique (9) qui reçoit à son entrée numérique les valeurs imposées par un contrôleur, par exemple un FPGA (13).

3. Procédé selon la revendication 1 ou 2, **caractérisé en ce que** le temps de montée (ty) du courant (I_{M}) depuis le seuil de commutation inférieur (UG) jusqu'au seuil de commutation supérieur (OG), ou le temps de descente (tz) du courant (I_{M}) depuis le seuil de commutation supérieur (OG) jusqu'au seuil de commutation inférieur (UG), ou bien la durée de période (tx) composée du temps de montée (ty) et du temps de descente (tz), ou un multiple de cette durée, sont mesurés et comparés avec un seuil supérieur de perte de pas (tmax), de sorte que lors d'un dépassement on détecte une perte de pas, et le seuil supérieur de perte de pas (tmax) est de préférence choisi en fonction de la vitesse du moteur, ou du type de moteur, ou encore du courant moteur.

4. Procédé selon la revendication 1 ou 2, **caractérisé en ce que** le temps de montée (ty) du courant (I_{M}) depuis le seuil de commutation inférieur (UG) jusqu'au seuil de commutation supérieur (OG), ou le temps de descente (tz) du courant (I_{M}) depuis le seuil de commutation supérieur (OG) jusqu'au seuil de commutation inférieur (UG), ou bien la durée de période (tx) composée du temps de montée (ty) et du temps de descente (tz), ou un multiple de cette durée, sont mesurés et comparés avec un seuil inférieur de perte de pas (tmin), de sorte que lors d'un passage au-dessous du seuil on détecte une perte de pas, et le seuil inférieur de perte de pas (tmin) est de préférence choisi en fonction de la vitesse du moteur, ou du type de moteur, ou encore du courant moteur.

5. Procédé selon l'une des revendications 3 ou 4, **caractérisé en ce que** le seuil supérieur de perte de pas (tmax) et/ou le seuil inférieur de perte de pas (tmin) sont déposés dans des tables de lecture dans une mémoire, ou sont calculés comme des fonctions ou des fonctions composées morceau par morceau par un contrôleur, par exemple un FPGA (13).

6. Procédé selon la revendication 1, **caractérisé en ce que** le signal de commande (S7) est palpé avec une fréquence prédéterminée, et les valeurs palpées (7.1) sont soumises à un filtrage passe-bas, de sorte que le signal filtré (S8), qui présente sensiblement la même période que le courant (I_{M}), est mémorisé à chaque variation "microstep" et à chaque durée de période complète dans une mémoire (16), et l'on calcule à partir de deux tronçons respectifs d'au moins une période du signal filtré (S8) un signal différentiel (DF) et on le compare avec un seuil de perte de pas (DFmax), de sorte que lorsqu'on atteint ce seuil, on détecte une perte de pas (SV).

7. Procédé selon la revendication 6, **caractérisé en ce que** le signal différentiel (DF) est calculé à partir d'une première demi-onde (H1) et d'une seconde demi-onde (H2) de la même période (Wp), et l'on exploite de préférence les demi-ondes qui commencent au niveau d'un passage à zéro.

8. Procédé selon la revendication 6, **caractérisé en ce que** le signal différentiel (DF) est calculé à partir de l'onde entière d'une période (Wp) et de l'onde entière de la période précédente (Wp-1) du signal filtré (S8).

9. Procédé selon la revendication 1, **caractérisé en ce que** le signal de commande (S7) est soumis à un filtrage passe-bas, par exemple par intégration, et le signal filtré (S 10), qui présente sensiblement la même période que le courant (IM), est soumis à une discussion de courbes, en particulier à une analyse de gradient, et quand les résultats de la discussion de courbes sont au-dessous de limites fixées, on détecte une perte de pas (SV).

10. Procédé selon la revendication 9, **caractérisé en ce que** l'intégration a lieu par incrémentation d'un compteur avec une fréquence prédéterminée quand le signal de commande présente un niveau haut, et par incrémentation d'un compteur avec une fréquence prédéterminée quand le signal de commande présente un niveau bas.

11. Procédé selon la revendication 9 ou 10, **caractérisé en ce que** la discussion de courbes inclut la détermination de pentes de courbes (TG) et/ou de leurs dérivées, c'est-à-dire des courbures de courbes, et l'on détermine les pentes de courbes (TG) ou leurs dérivées de préférence en continu ou par tronçons, et lors d'une détermination par tronçons, on calcule de préférence une moyenne de la pente de courbe par tronçons.

12. Procédé selon la revendication 11, **caractérisé en ce que** plusieurs tronçons (P1, P2, P3, P4 ; A, B, C, D) sont regroupés dans des groupes qui sont évalués chacun vis-à-vis de la reconnaissance de pertes de pas.

13. Appareil (1) pour reconnaître des pertes de pas d'un moteur pas à pas, comprenant un circuit pilote (2) pour alimenter un courant (S1) modulé en largeur d'impulsion (PWM) à une bobine (3) du moteur pas à pas, et comprenant un convertisseur courant/tension (4) pour détecter le courant (I_{M}) qui s'écoule à travers la bobine (3), dans lequel le convertisseur courant/tension (4) délivre un signal de tension (S3) proportionnel au courant détecté, incluant des moyens (6, 8) pour comparer si le courant détecté (I_{M}), par référence à une valeur prédéterminée (S4b), tombe à l'intérieur d'une bande de courant définie par un seuil de commutation supérieur (OG) et par un seuil de commutation inférieur (UG), **caractérisé en ce que** les moyens de comparaison livrent un signal de commande (S7) qui commande le circuit pilote (2) de telle façon que l'alimentation de courant (S1) à la bobine (3) est mise en service quand le courant détecté (I_{M}) est descendu jusqu'à la valeur seuil inférieure (UG), et que l'alimentation de courant (S1) à la bobine (3) est coupée quand le courant détecté (I_{M}) est monté jusqu'à la valeur seuil supérieure (OG), dans lequel il est prévu des moyens d'évaluation pour analyser l'évolution du signal du courant (I_{M}), ou respectivement sa variation, et pour détecter des écarts, provoqués par des pertes de pas, de l'évolution du signal de courant (I_{M}), ou sa variation, rapport à des valeurs de consigne ou à des plages de valeurs de consigne, lesdits moyens d'évaluation analysant l'évolution du signal du courant (I_{M}) ou respectivement sa variation, à partir du signal de commande (S7), dans lequel les moyens de comparaison comprennent un amplificateur différentiel (6) dont les deux entrées sont alimentées avec la valeur prédéterminée (S4b) et avec le signal de tension (S3, S4a) proportionnel au courant détecté, afin de les soustraire l'un de l'autre, et en option d'amplifier le signal différentiel, dans lequel les moyens de comparaison comprennent une bascule de Schmitt (8), de préférence une bascule de Schmitt de précision, à laquelle on alimente le signal de sortie (S5, S6a) de l'amplificateur différentiel (6), de sorte que l'hystérésis de la bascule de Schmitt (8) définit le seuil de commutation supérieur (OG) et le seuil de commutation inférieur (UG), et le signal de commande à la sortie de la bascule de Schmitt (8) pilote le circuit pilote (2) pour engendrer le courant PWM (S1) à alimenter à la bobine (3).

14. Appareil selon la revendication 13, **caractérisé par** un convertisseur numérique/analogique (9) pour engendrer la valeur prédéterminée (S4b), de préférence approximativement de forme sinusoïdale, et le convertisseur numérique/analogique (9) reçoit à son entrée numérique les valeurs imposées par un contrôleur, par exemple un FPGA (13).

15. Appareil selon la revendication 13 ou 14, **caractérisé par** un temporisateur (11) pour mesurer le temps de montée (ty) du courant (I_{M}) depuis le seuil de commutation inférieur (UG) jusqu'au seuil de commutation supérieur (OG), ou le temps de descente (tz) du courant (I_{M}) depuis le seuil de commutation supérieur (OG) jusqu'au seuil de commutation inférieur (UG), ou la durée de période (tx) composée du temps de montée (ty) et du temps de descente (tz) ou encore un multiple de cette durée, et des moyens de comparaison (12) pour comparer la durée temporelle mesurée avec un seuil supérieur de perte de pas (tmax), de sorte que lors d'un dépassement du seuil on détecte une perte de pas (SV).

16. Appareil selon la revendication 13 ou 14, **caractérisé par** un temporisateur (11) pour mesurer le temps de montée (ty) du courant (I_{M}) depuis le seuil de commutation inférieur (UG) jusqu'au seuil de commutation supérieur (OG), ou le temps de descente (tz) du courant (I_{M}) depuis le seuil de commutation supérieur (OG) jusqu'au seuil de commutation inférieur (UG), ou la durée de période (tx) composée du temps de montée (ty) et du temps de descente (tz) ou encore un multiple de cette durée, et des moyens de comparaison (12) pour comparer la durée temporelle mesurée avec un seuil inférieur de perte de pas (tmin), de sorte que lors d'un passage au-dessous du seuil on détecte une perte de pas (SV).

17. Appareil selon la revendication 15 ou 16, **caractérisé en ce que** le seuil supérieur de perte de pas (tmax) et/ou le seuil inférieur de perte de pas (tmin) sont déposés dans des tables de lecture dans une mémoire, ou sont calculés comme des fonctions ou des fonctions composées morceau par morceau par un contrôleur, par exemple un FPGA (13).

18. Appareil selon la revendication 13 ou 14, **caractérisé en ce que** le signal de commande (S7) est palpé avec une fréquence prédéterminée, et les valeurs palpées (7.1) sont soumises à un filtrage passe-bas, de sorte que le signal filtré (S8), qui présente sensiblement la même période que le courant (I_{M}), est mémorisé à chaque variation "microstep" et à chaque durée de période complète dans une mémoire (16), et il est prévu des moyens de formation de différence (19) pour calculer un signal différentiel (DF) à partir de deux tronçons respectifs d'au moins une période du signal filtré (S8) et des moyens de comparaison pour comparer le signal différentiel (DF) avec un seuil de perte de pas (DFmax), de sorte que lorsqu'on atteint ce seuil, on détecte une perte de pas (SV).

19. Appareil selon la revendication 18, **caractérisé en ce que** les moyens de formation de différence (19) sont réalisés pour calculer le signal différentiel (DF) à partir d'une première demi-onde (H1) et d'une seconde demi-onde (H2) de la même période (Wp), et l'on exploite de préférence les demi-ondes qui commencent au niveau d'un passage à zéro.

20. Appareil selon la revendication 18, **caractérisé en ce que** les moyens de formation de différence (19) sont réalisés pour calculer le signal différentiel (BF) à partir de l'onde entière d'une période (Wp) et de l'onde entière de la période précédente (Wp-1) du signal filtré (S8).

21. Appareil selon la revendication 13 ou 14, **caractérisé en ce que** le signal de commande (S7) est mené à travers un filtre passe-bas (20) et le signal filtré (S10), qui présente essentiellement la même période que le courant (I_{M}), est amené à des moyens de calcul (22), qui sont réalisés pour calculer une discussion de courbe, en particulier pour une analyse de gradient, et pour détecter si les résultats de la discussion de courbe tombent à l'extérieur de limites fixées en raison d'une perte de pas (SV).

22. Appareil selon la revendication 21, **caractérisé en ce que** le filtre passe-bas (20) est réalisé comme un intégrateur qui comprend de préférence un compteur qui est incrémenté à une fréquence prédéterminée (d) si le signal de commande (S7) présente un niveau haut, et qui est décrémenté à une fréquence prédéterminée si le signal de commande présente un niveau bas.

23. Appareil selon la revendication 21 ou 22, **caractérisé en ce que** les moyens de calcul (22) sont réalisés pour déterminer des pentes de courbes (TG) et/ou leurs dérivées, c'est-à-dire des courbures de courbes, et les pentes de courbes (TG) ou leurs dérivées peuvent être de préférence déterminées en continu ou par tronçons, et lors d'une détermination par tronçons, on calcule de préférence une moyenne des pentes de courbes par tronçons.
